# EUROPEAN PATENT APPLICATION

(11) **EP 3 062 522 A1**
(43) Date of publication of application: **31.08.2016**
(21) Application number: 14856143.4
(22) Date of filing: 22.10.2014
(51) Int. Cl.: H04N 21/435, H04N 21/235

(54) **DISPLAY CONTROL DEVICE, DELIVERY DEVICE, DISPLAY CONTROL METHOD, AND DISPLAY CONTROL SYSTEM**

(30) Priority: 22.10.2013 JP 2013219534; 07.01.2014 JP 2014000968; 25.03.2014 JP 2014061377
(71) Applicant: Sharp Kabushiki Kaisha, Osaka-shi, Osaka 545-8522 (JP)
(72) Inventor: WATANABE, Shuhichi, Osaka-shi, Osaka 545-8522 (JP); KUMAI, Hisao, Osaka-shi, Osaka 545-8522 (JP); TOKUMO, Yasuaki, Osaka-shi, Osaka 545-8522 (JP)
(74) Representative: Müller-Boré & Partner Patentanwälte PartG mbB
(86) International application number: PCT/JP2014/078104
(87) International publication number: WO 2015/060349

(57) **Abstract**

To adaptively change an aspect ratio. A reproduction device (200) is provided with an aspect ratio changing section (212) that specifies an adjacent region that is combined with a basic region with reference to MPD data (221) in which the basic region and a plurality of adjacent regions adjacent to the basic region and with different shapes to one another are defined, and a reproduction section (213) that sets a region as a display object in which the basic region and the specified adjacent region are combined.

## Description

### Technical Field

The present invention relates to a display control for content, and more specifically relates to aspect ratio control for content.

### Background Art

Currently, the Moving Picture Experts Group (MPEG) is proceeding with the task of internationally standardizing adaptive streaming technologies using HTTP as the MPEG-DASH (Dynamic Adaptive Streaming over HTTP) standard.

In MPEG-DASH, distributed content is divided into a plurality of segments, and a plurality of segment data items each coded at different bit rates is generated. This realizes adaptive streaming by distributing description information (metadata) referred to as media presentation description (MPD) data that describes information (bit rate, length and the like) about each segment to a client.

That is, the client in MPEG-DASH determines the resources (segment data) to be requested from a server, with reference to the distributed MPD data. The distribution of resources at a desired bit rate or resolution is given by requesting the determined resources from the server. In MPEG-DASH, adaptive streaming is realized in this way (refer to NPL 1).

### Citation List

### Non Patent Literature

NPL 1: MPEG-DASH: ISO/IEC23009-1 (2012), [online], 01 April 2012, ISO/IEC, Internet (URL: http://standards.iso.org/ittf/PubliclyAvailableStandards/c05 7623_ISO_IEC_23009-1_2012.zip)

### Summary of Invention

### Technical Problem

However, in the above-described related art, although the bit rate or resolution can be selected, the display aspect ratio of the content is not able to adaptively change. This problem is not limited to MPEG-DASH and arises in common with cases in which content is displayed with reference to description information, such as the MPD data.

The present invention is made in consideration of the above-described problem, and an object thereof is to provide a reproduction device capable of adaptively changing the aspect ratio of content.

### Solution to Problem

In order to solve the above-described problem, according to an aspect of the invention, there is provided a display control device that sets at least a portion of a displayable range that is a range of content able to be displayed on one screen as a display object, the device including a specifying section that, with reference to description information in which a basic region that is a display object in the displayable range and a plurality of adjacent regions that are regions in the displayable range adjacent to the basic region and with different shapes to one another are defined, specifies the adjacent region combined with the basic region; and a display control section that sets a part corresponding to a region as a display object in which the basic region and the adjacent region specified by the specifying section in the displayable range are combined.

In order to solve the above-described problem, according to another aspect of the invention there is provided a distribution device that distributes description information for content display control to a display control device that sets at least a portion of a displayable range that is a range of content able to be displayed on one screen as a display object, in which the description information defines a basic region that is a display object in the displayable range, and a plurality of adjacent regions that are regions in the display range adjacent to the basic region and with different shapes to one another.

In order to solve the above-described problem, according to still another aspect of the invention, there is provided a display control method executed by a display control device that sets at least a portion of a displayable range that is a range of content able to be displayed on one screen as a display object, the method including a specifying, with reference to description information in which a basic region that is a display object from the displayable range and a plurality of adjacent regions that are regions in the displayable range adjacent to the basic region and with different shapes to one another are defined, the adjacent region combined with the basic region; and controlling display by setting a part corresponding to a region as a display object in which the basic region and the adjacent region specified in the specifying from the displayable range are combined.

### Advantageous Effects of Invention

According to each aspect, an effect is exhibited in which the aspect ratio can be adaptively changed.

### Brief Description of Drawings

[Fig. 1] Fig. 1 is a block diagram illustrating a configuration of main portions of a distribution device and a reproduction device that configure a distribution system according to an embodiment of the invention.
[Fig. 2] Fig. 2 is a diagram illustrating each region that is set in order for the aspect ratio to be changed and examples of images with different aspect ratios displayed according to a combination of regions.
[Fig. 3] Fig. 3 is a diagram illustrating a description example of the components of MPD data that enables a change in the aspect ratio.
[Fig. 4] Fig. 4 is a flowchart illustrating an example of the aspect ratio changing process executed by the reproduction device.
[Fig. 5] Fig. 5 is a diagram describing Embodiment 2 of the invention, and illustrating an example showing each region set in order for the aspect ratio to be changed with a number of grids and an index value.
[Fig. 6] Fig. 6 is a diagram illustrating a description example of the components of MPD data that enables a change in the aspect ratio by illustrating the positions and ranges of a basic region and additional regions with the number of grids.
[Fig. 7] Fig. 7 is a diagram describing Embodiment 3 of the invention, and illustrating an example showing each region set in order for the aspect ratio to be changed with a reference position on the basic region as a reference.
[Fig. 8] Fig. 8 is a diagram illustrating a description example of the components of MPD data in which the position and the range of the additional region are shown with the upper left end of the basic region as a reference position.
[Fig. 9] Fig. 9 is a diagram illustrating another description example of the components of MPD data in which the position and the range of the additional region are shown with the upper left end of the basic region as a reference position.
[Fig. 10] Fig. 10 is a block diagram illustrating a configuration of the main portions of a distribution device and a reproduction device that configure a distribution system according to a reference example of the invention.
[Fig. 11] Fig. 11 is a diagram illustrating an example of full scale display according to differing display screen sizes.
[Fig. 12] Fig. 12 is a diagram illustrating a description example of the components of MPD data that enables an adaptive change in viewing angle.
[Fig. 13] Fig. 13 is a diagram illustrating an example in which an object region with the same range as the basic region is displayed at full scale and an example in which an object region with a wider range than the basic region is displayed at full scale.
[Fig. 14] Fig. 14 is a diagram illustrating a description example of the components of MPD data in which an object region with a wider range than the basic region is defined.
[Fig. 15] Fig. 15 is a diagram illustrating an example in which a desired region is selected by a user by displaying selection choices of object regions.
[Fig. 16] Fig. 16 is a diagram illustrating a description example of components of MPD data used in a case of displaying selection choices of object regions.
[Fig. 17] Fig. 17 is a flowchart illustrating an example of a full scale display process executed by a reproduction device according to a reference example of the invention.
[Fig. 18] Fig. 18 is a flowchart illustrating an operation example of a partial picture distribution application according to Supplemental Item 1.
[Fig. 19] Fig. 19 is a diagram illustrating an example of a selection process of a partial region of the partial picture distribution application.
[Fig. 20] Fig. 20 is a diagram illustrating a description example of MPD data of a partial picture distribution application.
[Fig. 21] Fig. 21 is a diagram illustrating an example of the selection process of an interest region according to Supplemental Item 2.
[Fig. 22] Fig. 22 is a diagram illustrating a description example of MPD data according to Supplemental Item 2.
[Fig. 23] Fig. 23 is a diagram illustrating another description example of MPD data according to Supplemental Item 2.
[Fig. 24] Fig. 24 is a diagram illustrating yet another description example of MPD data according to Supplemental Item 2.
[Fig. 25] Fig. 25 is a diagram illustrating still another description example of MPD data according to Supplemental Item 2.
[Fig. 26] Fig. 26 is a diagram illustrating a description example of an in-band event message according to Supplemental Item 3.
[Fig. 27] Fig. 27 is a diagram illustrating a description example of an event message according to Supplemental Item 3.

### Description of Embodiments

### [Embodiment 1]

Below, embodiments of the invention will be described in detail.

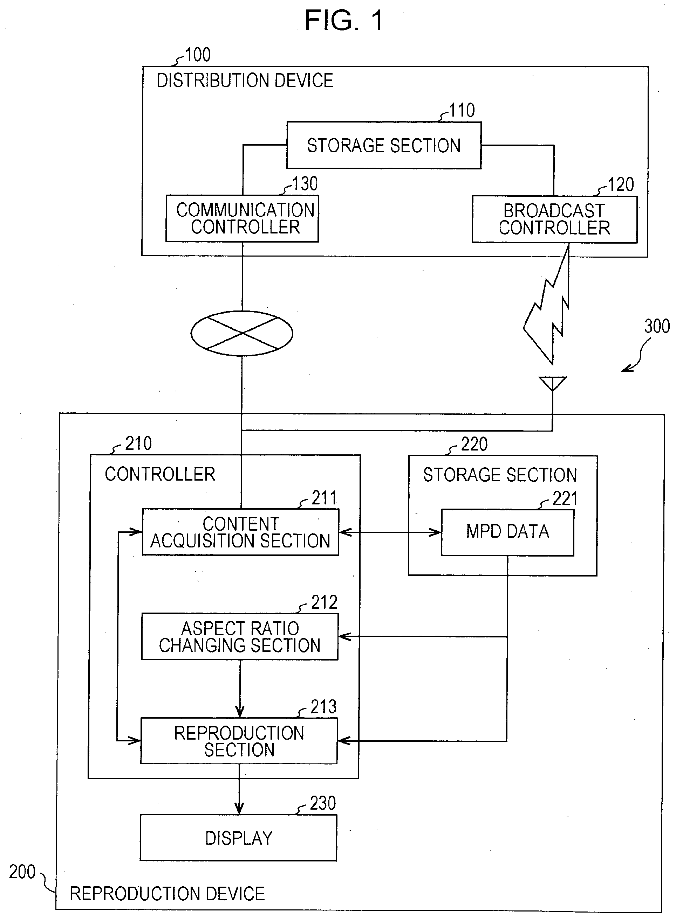

### <Overview of System: Fig. 1>

First, a configuration of the distribution system (display control system) 300 according to an aspect of the invention will be described based on Fig. 1. Fig. 1 is a block diagram illustrating a configuration of the main portions of the distribution device 100 and the reproduction device (display control device) 200 that configure the distribution system 300.

The distribution system 300 is a system in which the reproduction device 200 receives and reproduces content distributed by the distribution device 100. In distribution system 300, it is possible to perform distribution of the content using both a communication network and a broadcast network. The communication network used is not particularly limited, and may be the Internet or the like. Here, although an example performing distribution through a communication network or a broadcast network by one distribution device 100 is illustrated, a distribution device that performs distribution via a communication network and a distribution device that performs distribution via a broadcast network may be separately provided. Further, a plurality of distribution devices may be included or a plurality of reproduction devices may be included in the distribution system 300.

The distribution device 100 is a device that distributes content to the reproduction device 200, and is provided with a storage section 110, a broadcast controller 120, and a communication controller 130. The distribution device 100 distributes content stored in the storage section 110 via a broadcast network according to control of the broadcast controller 120. The distribution device 100 distributes content stored in the storage section 110 via a communication network according to control of the communication controller 130. In this way, by using two distribution paths, adaptive content distribution such as distributing the main content via a broadcast network, and distributing content associated with the content via a communication network according to a request from the reproduction device 200 is possible. The distribution device 100 also reads MPD data corresponding to the distributed content from the storage section 110 and distributes the MPD data to the reproduction device 200.

The reproduction device 200 is a device that reproduces content distributed from the distribution device 100 and includes a controller 210 that performs overall control of the operation of the reproduction device 200, a storage section 220 that stores data used by the reproduction device 200, and a display 230 that displays an image according to the control of the controller 210. A content acquisition section 211, an aspect ratio changing section (specifying section) 212, and a reproduction section (display control section) 213 are included in the controller 210, and the MPD data (description information) 221 is stored in the storage section 220. The display 230 and the storage section 220 may be devices external to the reproduction device 200 that are connected to the reproduction device 200.

The content acquisition section 211 acquires the content and the MPD data from the distribution device 100. The content and the MPD data are acquired using a communication path, a broadcast path, or using both paths. The acquired MPD data is stored as MPD data 221 in the storage section 220. For example, it is possible to acquire the images and audio of content and the MPD data with the broadcast path, and to acquire necessary components (such as subtitle data) based on the acquired MPD data with the communication path. A portion or all of the MPD data and the content may be acquired from devices other than the distribution device 100.

The aspect ratio changing section 212 changes the display aspect ratio of content acquired by the content acquisition section 211. Although described in detail later, the aspect ratio changing section 212 specifies a basic region that is the display object from the range displayable on one screen of content acquired by the content acquisition section 211, with reference to the MPD data 221, and causes the part corresponding to the basic region to be displayed. When the aspect ratio is changed, an adjacent region combined with the basic region is specified, with reference to the MPD data 221, and the part of the content corresponding to the region in which these regions are combined is caused to be displayed.

The reproduction section 213 reproduces the content acquired by the content acquisition section 211. More specifically, the reproduction section 213 causes the part corresponding to the regions determined by the aspect ratio changing section 212 from the displayable range of the content to be displayed on the display 230.

The MPD data 221 is description information (metadata) that is referenced for acquisition and reproduction of the content, and combinations of reproducible components and the like are described for each reproduction period (Period) of the content. The main feature point is the point of the MPD data 221 of the embodiment including information defining the basic region that is the display object from the displayable range of the content, information defining a plurality of adjacent regions that are regions within the displayable range that are adjacent to the basic region and with different shapes to one another, and information defining the positional relationship between the basic region and the adjacent regions.

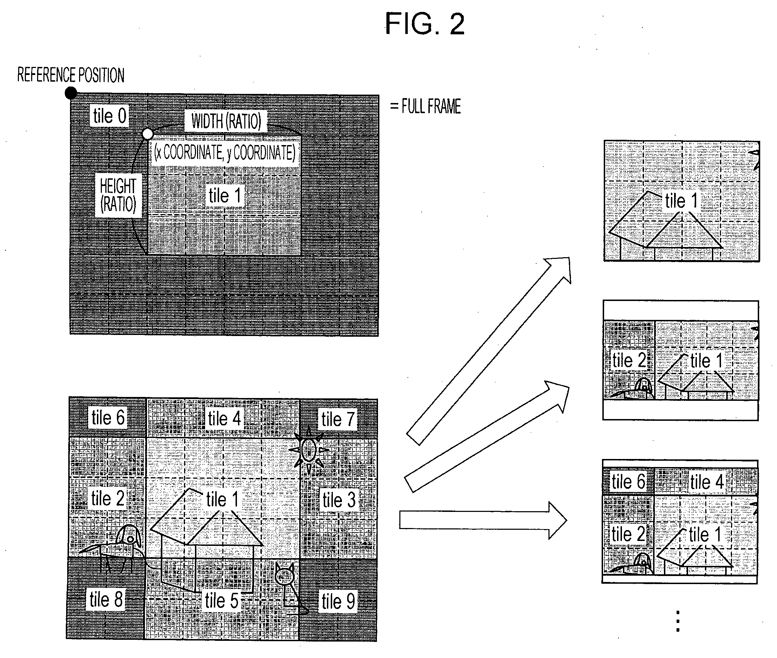

### <Change of Aspect Ratio: Fig. 2>

Next, changing of the aspect ratio will be described based on Fig. 2. Fig. 2 is a diagram illustrating each region that is set in order for the aspect ratio to be changed and examples of images with different aspect ratios displayed according to a combination or regions.

In the example in the drawings, a rectangular region (tile1) is defined in the interior of the full frame region (tile0). In the example, the full frame region is the range of content (displayable range) displayable on one screen. Since the region (tile1) is a region defined as the display object, and is a region with the same aspect ratio as the full frame region (tile0) and becomes the base when changing the aspect ratio, the region (tile1) is referred to below as the basic region. The position and range of the basic region are specified by the coordinates of the upper left end (x coordinate, y coordinate), the width and the height, in a coordinate system in which the upper left end of the full frame region (tile0) is the reference position. Although described in detail later, the width and height are represented by the ratio to each of the width and the height of the full frame region (tile0).

In the example in the drawings, the region that is not the basic region (tile1) from the full frame region (tile0) is divided into 8 regions (tile2 to 9). Since the eight regions are regions that change the aspect ratio of the display image by being added to the basic region, these regions are referred to below as additional regions (adjacent regions). Specifically, the additional region (tile2) that is a rectangular region adjacent to the left side of the basic region and with the same height as the basic region, the additional region (tile3) that is a rectangular region adjacent to the right side of the basic region and is has the same height as the basic region, the additional region (tile4) that is a rectangular region adjacent to the upper side of the basic region and has the same width as the basic region, and the additional region (tile5) that is a rectangular region adjacent to the lower side of the basic region and is a rectangular region same width as the basic region. An additional region (tile 6) that is a rectangular region positioned to the upper left of the basic region, and with the same width as the additional region (tile2) and the same height as the additional region (tile4), an additional region (tile7) that is a rectangular region positioned to the upper right of the basic region and with the same width as the additional region (tile3) and the same height as the additional region (tile 4), an additional region (tile8) that is a rectangular region positioned to the lower left of the basic region and with the same width as the additional region (tile2) and the same height as the additional region (tile5), and an additional region (tile9) that is a rectangular region positioned to the lower right of the basic region and with the same width as the additional region (tile3) and the same height as the additional region (tile5).

Because the additional regions (tile6 to 9) are not adjacent to the basic region (do not share an edge with) in the vertical or horizontal directions, the additional regions (tile6 to 9) are used in combination with the additional regions (tile2 to 5) adjacent to the basic region in the vertical and horizontal directions. The additional region (tile6) is added to the basic region combined with the additional region (tile2) and the additional region (tile4) adjacent to the additional region (tile6).

With the exception of the combinations of the additional region (tile2) and the additional region (tile3), the additional region (tile6) and the additional region (tile7), and the additional region (tile8) and the additional region (tile9), each additional region differs in size. In other words, in the MPD data referenced by the reproduction device 200, the regions that non-uniformly divide the displayable range of the content are defined. Therefore, by the additional regions being combined with the basic region, it is possible to generate an image with various aspect ratios.

Here, in a case where there is displayable range content as illustrated in the lower left of Fig. 2, the part corresponding to the basic region is first displayed as illustrated in the upper right of the drawing. Here, when a user performs an operation that causes an image in a region adjacent to the basic region to the left, as illustrated in the center right side of the drawing, a part corresponding to the region combined with the additional region (tile2) positioned adjacent to the basic region on the left is displayed. The aspect ratio of the image is 1:2 (vertical:horizontal) and is changed from the aspect ratio (3:4) of the basic image.

When display is performed as in the center right side of the drawing, when the user performs an operation that causes the image of the region to the upper side thereof to be displayed, an image corresponding to the region in which the basic region, the additional region (tile2), the additional region (tile4), and the additional region (tile6) are combined are displayed. The aspect ratio of the image is 2:3 (vertical:horizontal) and the aspect ratio is further changed.

Rather than a configuration in which the basic region and the adjacent region are separately written to the MPD data and combined to be displayed, the same operation can be realized even with a configuration in which a composite region that includes the basic region and the adjacent region is separately defined, and resources (data of picture components) for the composite region are prepared and written to the MPD associated with the composite region.

In a case where the aspect ratio of the image displayed in this way is changed, regions in which the image is not displayed arise on the display screen. These regions may be arranged at the top and bottom of the screen, respectively, or may be arranged at either the top or bottom, as in the example on the center right side of the drawing. Naturally, another image or information may be displayed in the region. In the example in the drawing, the basic region is displayed on the display screen and the horizontal width of the region in which the basic region and the additional region (tile2) are combined is displayed so as to match the horizontal width of the display screen, so that the part that becomes the display object of the content is displayed at maximum size. However, how the region that is the display object is arranged on the display screen is not particularly limited, and arrangement may be performed so that the user is able to recognize the changing of the aspect ratio.

In addition, an operation for changing the aspect ratio and an operation including direct instructions, such as the image of the left adjacent region being displayed and the image of the upper side region being displayed, that the user directly operates as above are unnecessary. For example, there are tablet terminals that have a screen with a 4:3 aspect ratio, and when the screen is rotated from landscape orientation to portrait orientation (orientation is changed), an operation such as displaying the 4:3 tile1 in landscape orientation and displaying tile1 and tile5 by automatically determining and selecting the combination of tile1 and tile5 capable of maximum display at 3:4 when set to portrait orientation is possible. In this case, the data of each tile may be arranged normally, or only tile1 may be arranged normally by broadcasting, and only the data of tile5 for which the determination of results addition is made necessary may be acquired by receiving a request through communication.

Naturally, when the layout is changed by tilting a mobile terminal such as a tablet, it may be possible to switch to selecting an additional region at a higher position with respect to the basic region or selecting an additional region at a lower position even if the layout is the same. The mobile terminal may be used with either set to default, or may be displayed whenever there is a request selecting either when the layout changes.

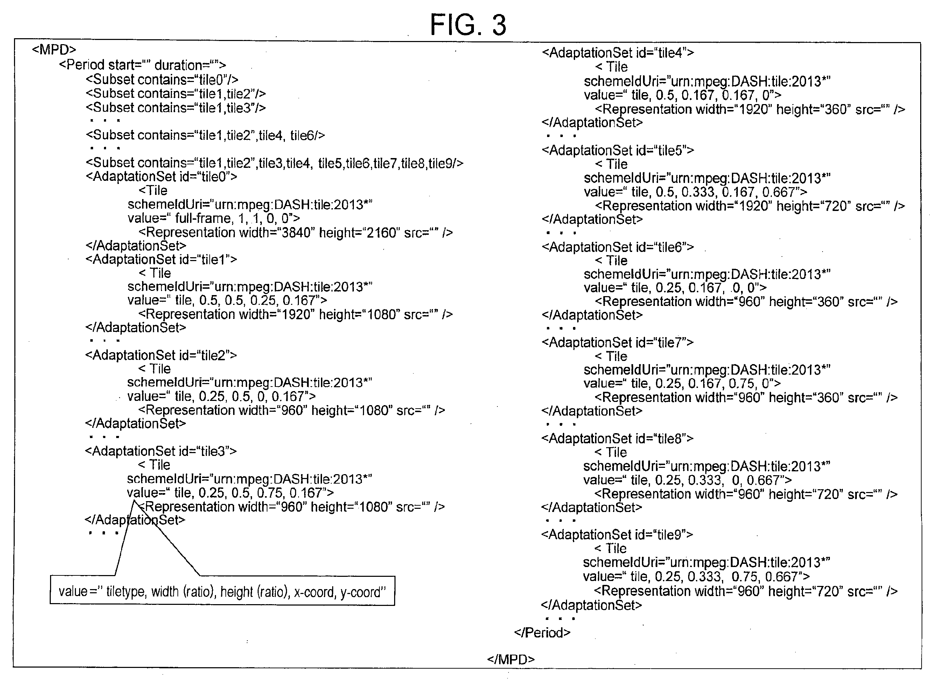

### <Example of MPD Data: Fig. 3>

An example of the MPD data 221 that enables changing of the aspect ratio as described above will be described based on Fig. 3. Fig. 3 is a diagram illustrating a description example (data structure) of the components of MPD data 221 that enables a change in the aspect ratio.

In the MPD data 221 in the drawing, variations on combinations of the above-described regions (basic region tile1 and additional regions tile0 and tile2 to 9) are defined according to a subset (Subset) that is elements indicating objects reproducible at the same time. More specifically, variations on combinations are defined such that the shapes after combination become rectangular. The description of <Subset contains = "tile1, tile2" /> indicates that reproducing the basic region (tile1) and the additional region (tile2) at the same time (more specifically, displaying the parts corresponding to these regions from the displayable range of content) is possible.

In the MPD data 221 in the drawing, the position and range of each region (tile0 to 9) is indicated according to the elements of the adaptation set (AdaptationSet). Specifically, the position and range of each region (tile0 to 9) is indicated by the type of tile (tiletype), width of the region (width), height of the region (height), and the x and y coordinates of the upper left end of the region (x-coord, y-coord) described in the value (value) included in the element.

For example, value = "full-frame, 1, 1, 0, 0" is described in the adaptation set of the full frame region (tile0). In light of the description, it is possible to specify that the region (tile0) is a full frame region, the height and width is one times the height and width of the full frame region, respectively, and that the coordinates of the upper left end are (0, 0). For example, value = "tile, 0.5, 0.5, 0.25, 0.167" is described in the adaptation set of the basic region (tile1). In light of the description, it is possible to specify the basic region (tile1) is the region of the tile obtained by dividing the displayable range, the height and width is 0.5 times the height and the width of the full frame region, respectively, and the coordinates of the upper left end to be (0.25, 0.167). The coordinates are coordinates in a coordinate system where the upper left end (reference position) of the full frame region is the origin point (0, 0), the upper right end of the region is (1, 0), and the lower left end of the region is (0, 1). By using the value (URL) of src described in the Representation element of each region, it is possible to acquire the content corresponding to the region thereof.

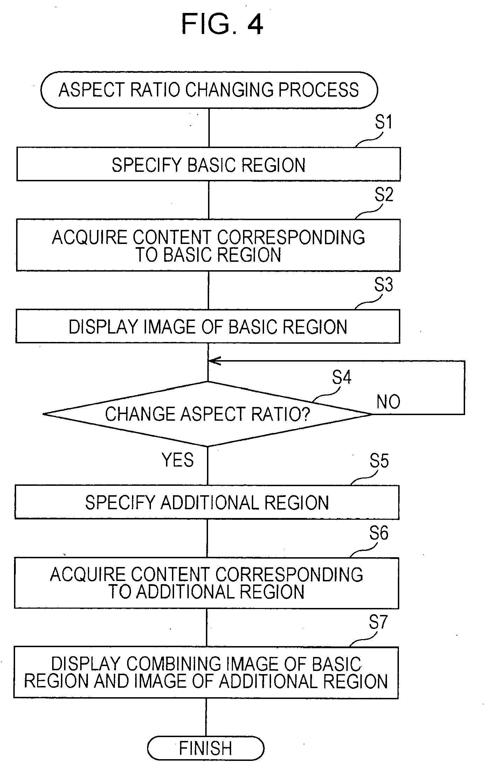

### <Flow of Aspect Ratio Changing Process: Fig. 4>

Next, the flow of the aspect ratio changing process (display control method) executed by the reproduction device 200 will be described based on Fig. 4. Fig. 4 is a flowchart illustrating an example of the aspect ratio changing process. In the drawing, a process in a state where the content acquisition section 211 completes acquisition of the MPD data 221 is illustrated.

The aspect ratio changing section 212 specifies the position and range of the basic region, with reference to the MPD data 221 (S1). For example, in a case where the MPD data 221 in Fig. 3 is referenced, the position and the range of the basic region are specified in light of the description of the value of tile1. As the method of selecting the adaptation set corresponding to the basic region from the plurality of adaptation sets, predetermining the number of the tile of the basic region, determining to select the adaptation set described earliest form the subsets, determining to select the adaptation set described earliest from the adaptation sets for which the type is tile, and the like are considered. In addition thereto, determining to select the subset to which the default attribute is applied, determining to select the adaptation set to which the default attribute is applied in the value of the element, and the like are considered.

For example, in order to indicate that the tile1 is the basic region, a special value "tile-base" may be prepared as the value of tiletype, and it is particularly possible to distinguish the value from another tile. Alternatively, a one-bit identifier is-base that identifies the basic region or the additional region may be separately defined and added to the value of the tile element. More extremely, a realization method such as defining the tile element itself at the two elements of Tile-B (basic region) and Tile-A (additional region), and distinguishing the types of elements themselves is also possible.

The aspect ratio changing section 212 notifies the reproduction section 213 of the position and the range of the basic region specified as above. In so doing, the reproduction section 213 acquires the image (moving image) of the part corresponding to the notified basic region from the content acquired by the content acquisition section 211 from the server (for example, distribution device 100)(S2), and causes the display 230 to display the acquired content (S3).

The aspect ratio changing section 212 determines whether to change the aspect ratio during the display of the image (during reproduction of the moving image)(S4). Although the opportunity for changing the aspect ratio is not particularly limited, a predetermined user operation (such as an operation selecting any vertical or horizontal direction) being performed may be determined as the opportunity to change the aspect ratio. Display for enabling the user to easily select the predetermined additional region may be performed. For example, when performing display based on the basic region, in a case where the presence of additional regions in the vertical and horizontal and oblique directions is specified from the MPD data 221, either or both of information for indicating the presence of these additional regions and information indicating the operation for selecting these additional regions may be displayed. Specifically, that selection of the additional region on the right side of the screen is possible may be presented to the user through an operation displaying a right facing arrow at the right end of the screen or the like, and selecting right. The screen as illustrated on the lower left in Fig. 2 may be displayed and it may be possible select the additional region from the screen.

In a case where it is determined to changed the aspect ratio (YES in S4), the aspect ratio changing section 212 specifies the additional region added to the basic region (S5, specifying step). For example, in a case where an operation selecting the direction during display of the image of the basic region is performed, the additional region position in the selected direction with respect to the basic region is specified as the additional region added to the basic region. According to a specific example, in a case where the upward direction is selected, tile4 positioned above the basic region is specified as the additional region, and in a case where the upward right direction is selected, tile 3 positioned to the right of the basic region, tile4 positioned above, and tile7 positioned to the upward right are specified (refer to Fig. 2). It is possible for the positional relationship between the basic region and the additional region to be specified from the description of the values of each tile in the MPD data 221.

Thereafter, the aspect ratio changing section 212 notifies the reproduction section 213 of the position and range of the region in which the additional region and the basic region are combined. In so doing, the reproduction section 213 acquires the image (moving image) of the part corresponding to the notified region from the content acquired by the content acquisition section 211 from the server (for example, distribution device 100)(S6), causes the display 230 to display the acquired content (S7, display control step), and the aspect ratio changing process finishes.

In the examples above, although one additional region is defined in one direction (upward, downward, left, right, or oblique) with respect to the basic region, a plurality of additional regions may be defined in one direction. In other words, although not directly adjacent to the basic region with respect to the additional region (directly adjacent region) that is directly adjacent to the basic region, the additional region directly adjacent to the directly adjacent region may be defined. For example, although the additional region adjacent in the downward direction of the basic region (tile1) in the example in Fig. 2 is only tile5, tile5 may be divided in two in the height direction, and the tile5-1 directly adjacent to the basic region and the tile5-2 direction adjacent to tile5-1 may be defined. In so doing, it is possible to change the aspect ratio in a stepwise manner in one direction.

In a case of such a configuration, until which stage a combination object is set may be determined according to an operation when the user selects the additional region. For example, in a case of a configuration that selects the additional region by designating the direction with a dragging operation with an input device such as a touch panel, the combination object may be set up to a stage in response to the length of the trace of the dragging operation. In so doing, the aspect ratio can be changed in a stepwise manner with an intuitive operation.

### [Embodiment 2]

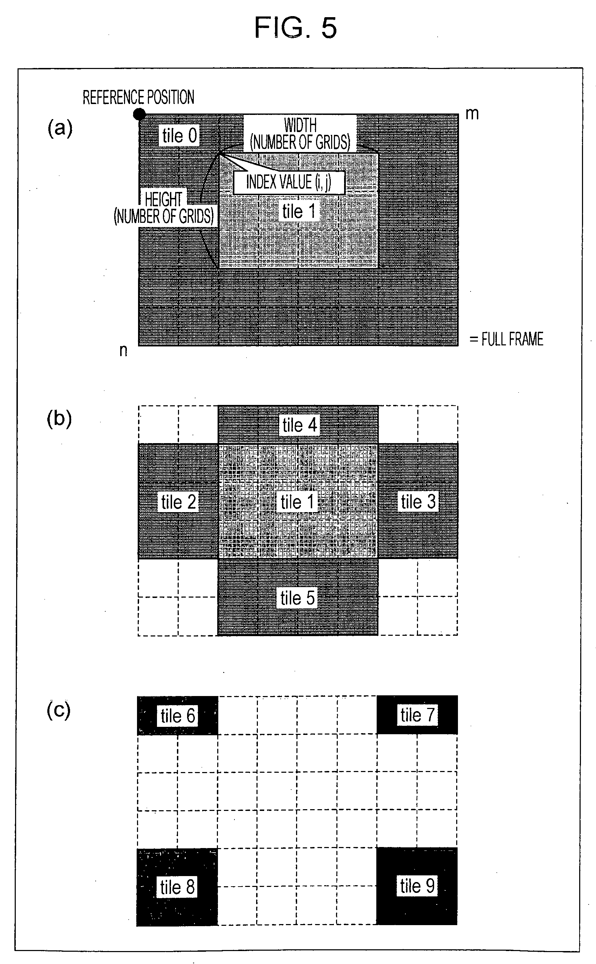

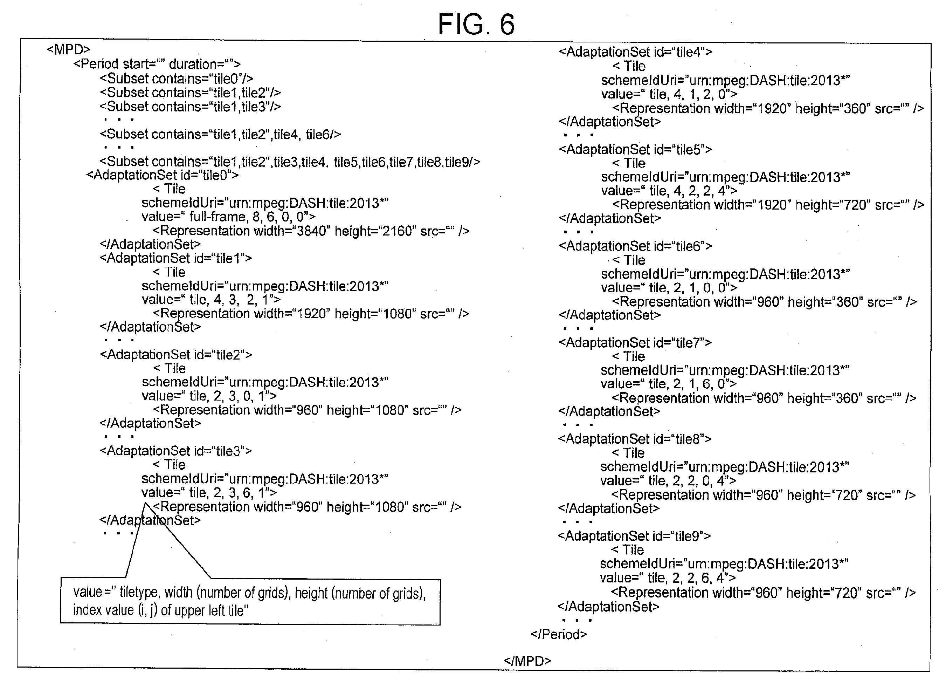

In the embodiment, an example describing the position and range of the basic region and the additional region with different forms to the embodiment will be described based on Figs. 5 and Fig. 6. Since the configuration of the system and devices (Fig. 1) and the flow of the process (Fig. 4) are the same and the above embodiment, description thereof will not be repeated in the present embodiment.

Fig. 5 is a diagram illustrating an example in which each region set in order for the aspect ratio to be changed is represented with the number of grids and an index value. In the example in Fig. 5(a), the feature of a rectangular region (tile1) being defined inside the full frame region (tile0), the feature of the upper left end of the full frame region (tile0) becoming the reference position, and the feature of the basic region (tile1) being defined on the inner side of the full frame region (tile0) are shared with the example in Fig. 2. As illustrated in Figs. 5(b) and 5(c), the arrangement of the additional regions (tile2 to 9) is also the same as the example in Fig. 2.

The points of different between the example in Fig. 5 and the example in Fig. 2 are the full frame region (tile0) is partitioned into a vertical n x horizontal m grid (grid), the point of the upper right end of the basic region is represented by the index value (i, j) based on the number of grids (number of unit grids), and the width and height of the basic region is represented by the number of grids.

### <Example of MPD Data: Fig. 6>

An example of the MPD data of the embodiment will be described based on Fig. 6. Fig. 6 is a diagram illustrating a description example (data structure) of the components of MPD data that enables a change in the aspect ratio by indicating the positions and ranges of a basic region and additional regions with the number of grids. Since the MPD data in Fig. 6 is the same as the example in Fig. 3 other than the description of the values of each tile differing, description other than of the values will not be repeated.

In the MPD data in Fig. 6, through the description of the values, the position and range of each region (tile0 to 9) are indicated by the type of the tile (tiletype), the width of the region (width), the height of the region (height), and the index value (i, j) of the tile on the upper left end of the region. The width of the region (width) is the number of tiles in the width direction of the region, and the height of the region (height) is the number of tiles in the height direction of the region. The index value (i, j) of the tile on the upper left end of the region is the value in which the position of the tile position on the upper left end from the tiles that configure the region is indicated by the number of tiles in the width and height direction with the tile (tile on the upper left end of the full frame region) including the reference position as a reference.

For example, value = "full-frame, 8, 6, 0, 0" is described in the adaptation set of the full frame region (tile0). In light of this description, it is possible to specify that the region (tile0) is the full frame region, the width is eight tiles, the height is six tiles, and the tile on the upper left end is a tile that includes (0, 0), that is, the reference position. For example, value = "tile, 4, 3, 2, 1" is described in the adaptation set of the basic region (tile1). In light of this description, it is possible to specify that the basic region (tile1) is a region of a tile obtained by dividing the displayable range of the content, the width is four tiles, the height is three tiles, and the tile on the upper left end is a tile at a position advanced by two to the right and one downwards from the tile that includes the reference position.

In a case of defining the basic region and the additional region with grid units as in the embodiment, the displayable region may be partitioned with a fineness level according to how finely each region is defined. For example, although partitioned into a grid of eight in the width direction and six in the height direction in the example in Fig. 5, it is possible to define each region with finer units (height/width of half the grid in Fig. 5 by partitioning into a grid with 16 in the width direction and 12 in the height direction.

Either of a description method that represents the ratio to the full frame region illustrated in Embodiment 1 or a description method according to the grid units of the embodiment has an effect of expressing a partial region such as the basic region and the additional region without awareness of the actual image size (resolution, number of pixels). That is, the partial region is expressed in common with the ratio value or the divided grid, even if the image size of the source full frame is SD (960 x 540), HD (1920 x 1080) or UHD (3840 x 2160 or 7680 x 4320). For example, in a case where tile1 illustrated in Fig. 5 is disclosed based on the number of pixels, although value = "tile, 480, 360, 240, 120" in an SD (960 x 720) full frame and value = "tile, 960, 720, 480, 240" in an HD (1920 x 1440) full frame are attained, a shared value = "tile, 4, 3, 2, 1" is described in grid units. Though these characteristics, when the MPD data is generated, components of differing actual sizes (Representation in the MPD data) can be collected and described in one element (Adaptation Set in the MPD data). In so doing, even in a case where there is a plurality of component data items with different actual sizes in a partial region with the same position, management thereof is made easy.

In a case where the full frame region (tile0) does not become the reproduction object, the adaptation set of the full frame region (tile0) is not described in the MPD data, and the number of tiles in the full frame region may be added to the value for each tile to describe the MPD data. For example, the value of the basic region (tile1) is described as value = "tile, 8, 6, 4, 3, 2, 1" is described. At this time, the second and third values "8, 6" represent the number of tiles (number of grids) in the full frame.

### [Embodiment 3]

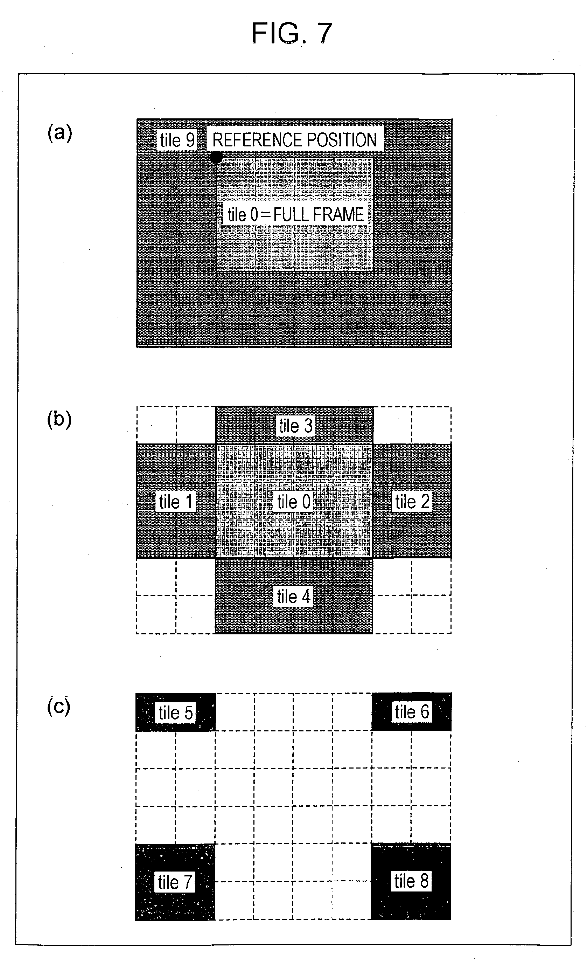

In the embodiment, an example describing the position and range of the basic region and the additional region will be described with different forms to the embodiment based on Fig. 7, and Figs. 8 and 9. Since the configuration of the system and devices (Fig. 1) and the flow of the process (Fig. 4) is the same as Embodiment 1, description thereof will not be repeated in the present embodiment.

Fig. 7 is a diagram illustrating and example in which each region set in order for the aspect ratio to be changed with a reference position on the basic region represented as a reference. As illustrated in Fig. 7(a), the basic region (tile0) is defined on the inside of the region (tile9) corresponding to the displayable range of the content. The basic region (tile0) is a full frame region, and the position on the upper left end of the region is the reference position. As illustrated in Figs. 7(b) and 7(C), the eight additional regions (tile1 to 8) are defined with the basic region (tile0) as a center.

In this way, by setting the reference position above the basic region, extension of the additional region becomes easier than a case of setting the reference position on the outer periphery of the displayable range as in each embodiment. For example, in the Example in Fig. 7, in a case where the content corresponding further to the outer side than the region (tile9) is acquirable, it is possible to easily define the tile for causing the content to be displayed on the outer side of the region (tile9).

In other words, the initial stage of service is suitable to configuring an extended service such as providing only the picture content of the basic region or only the picture content of the basic region and the additional region adjacent thereto, and additionally providing picture content of further peripheral regions thereto according to the expansion of demand.

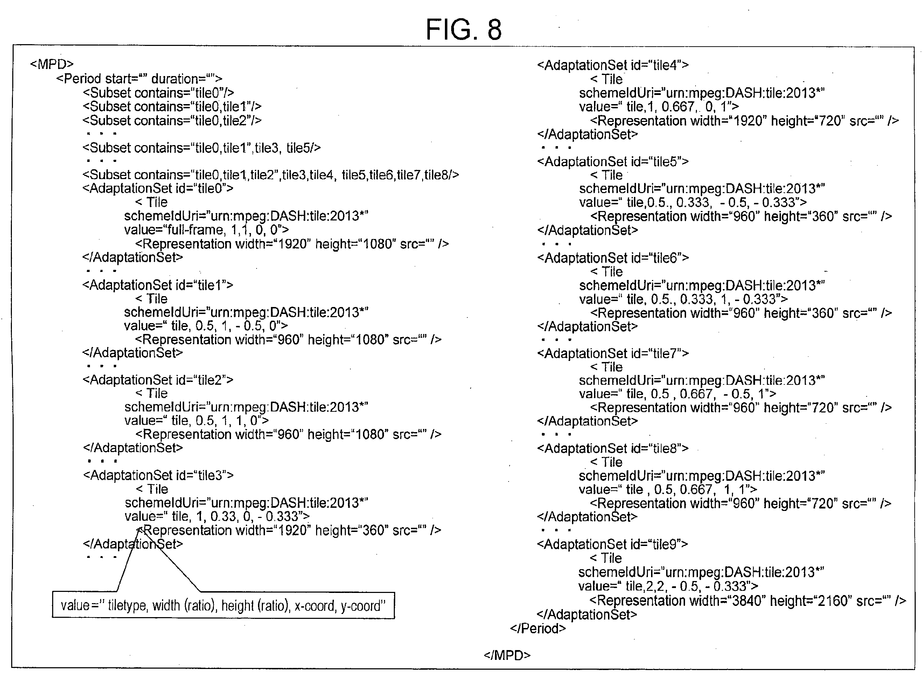

### <Example 1 of MPD Data: Fig. 8>

An example of the MPD data of the embodiment will be described based on Fig. 8. Fig. 8 is a diagram illustrating a description example (data structure) of the components of MPD data in which the position and the range of the additional region are shown with the upper left end of the basic region as a reference position. Since the MPD data in Fig. 8 is the same as the example in Figs. 3 and 6 other than the description of the values of each tile differing, description other than of the values will not be repeated.

In the MPD data in Fig. 8, similarly to the examples in Figs. 3 and 6, the position and range of each region (tile0 to 9) is also defined by the description of the value. Specifically, the definition is performed by the type of tile (tiletype), the width of the region (width), the height of the region (height), and the x and y coordinates of the upper left end of the region (x-coord, y-coord) included in the value. The width (width) and height (height) of the region indicate the ratio of the width and the height of the region to the width and height of the full frame region. The coordinates are coordinates in a coordinate system where the upper left end (reference position) of the full frame region is the origin point (0, 0), the upper right end of the region is (1, 0), and the lower left end of the region is (0, 1).

For example, value = "full-frame, 1, 1, 0, 0" is described in the adaptation set of the full frame region (tile0). In light of this description, it is possible to specify that the region (tile0) is the full frame region, the width and height are the same as the full frame region, and the coordinates of the upper left end match the reference position. For example, value = "tile, 0.5, 1, - 0.5, 0" is described in the adaptation set of the additional region (tile1). In light of this description, it is possible to specify the additional region (tile1) is the region of the tile, the width is 0.5 times the full frame, the height is 1.0 times the full frame, and the coordinates of the upper left end are (-0.5, 0).

In order to indicate that the full frame region (tile0) is the basic region, a special value "full-frame-base" may be prepared as the value of tiletype and made identifiable. Alternatively, a one-bit identifier is-base that identifies the basic region or the additional region may be separately defined and added to the value of the tile element. In addition, instructions through the default settings illustrated in Embodiment 1 are also possible.

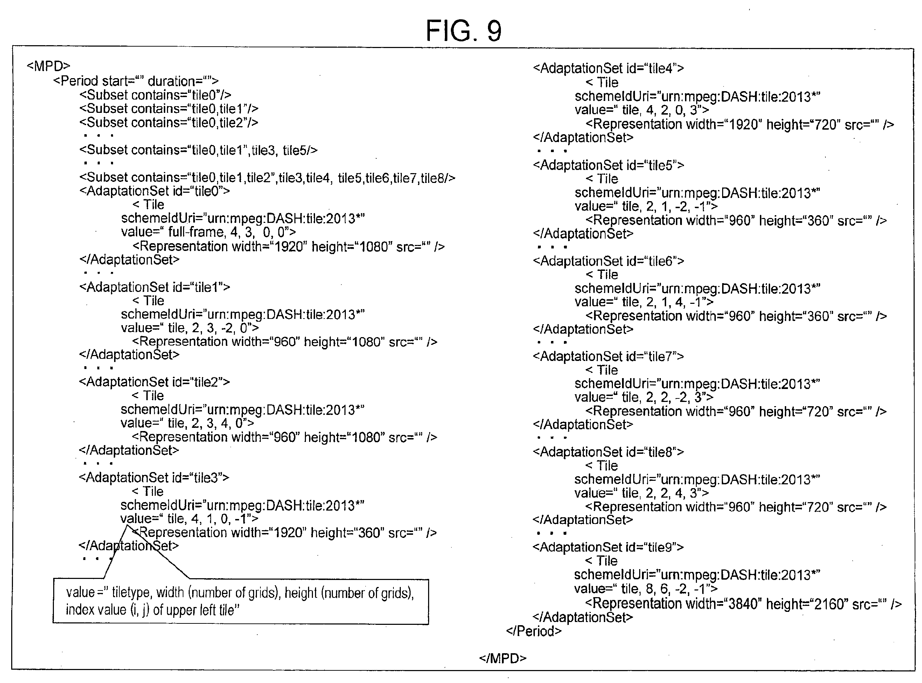

### <Example 2 of MPD Data: Fig. 9>

Another example of the MPD data of the embodiment will be described based on Fig. 9. Fig. 9 is a diagram illustrating a description example (data structure) of the components of MPD data in which the position and the range of the additional region are shown with the upper left end of the basic region as a reference position. Since the MPD data in Fig. 9 is the same as the example in Figs. 3, 6, and 8 other than the description of the values of each tile differing, description other than of the values will not be repeated.

In the MPD data in Fig. 9, similarly to the examples in Figs. 3, 6 and 8, the position and range of each region (tile0 to 9) is also defined by the description of the value. Specifically, the definition is performed by the type of tile (tiletype), the width of the region (width), the height of the region (height), and the index value (i, j) of the upper left end of the region included in the value. The width (width) and height (height) of the region respectively indicate the number of tiles in the width direction and the height direction of the region, similarly to Embodiment 2. The index value (i, j) is the value in which the position of the tile position on the upper left end from the tiles that configure the region is indicated by the number of tiles in the width and height direction with the tile (tile on the upper left end of the full frame region) including the reference position as a reference.

For example, value = "full-frame, 4, 3, 0, 0" is described in the adaptation set of the full frame region (tile0). In light of this description, it is possible to specify the region (tile0) is the full frame region, the width is four tiles, the height is three tiles, and the tile on the upper left end is a tile that includes the reference position. For example, value = "tile, 2, 3, -2, 0" is described in the adaptation set of the additional region (tilel). In light of this description, it is possible to specify that the additional region (tile1) is the full frame region, the width is two tiles, the height is three tiles, and the tile on the upper left end is a tile at a position from the tile that includes the reference position and progresses to the left by two.

As is evident from Embodiments 1 to 3, the method of selecting the standard position is not particularly limited. The method may be determined, as appropriate, according to the use and form of the picture distribution service configured. It is only necessary that the standard positions between the regions be made uniform when the plurality of basic regions and additional regions are described in one item of MPD data. By making the standard positions uniform, the spatial positional relationship between the basic region and the additional regions can be ascertained, and selected and used, as appropriate.

### [Modification Example]

In each of the embodiments, although examples defining the regions according to the position of the vertex of the upper left corner of the region (coordinates or grid) and the width and height of the region are illustrated, the method of defining the regions is not limited to these examples. For example, in a case where the region is a rectangle, the region thereof may be defined by information (for example, coordinates) indicating the position of two opposing vertices.

### [Overview]

The display control device (reproduction device 200) according to Aspect 1 of the invention that sets at least a portion of a displayable range that is a range of content able to be displayed on one screen as a display object, the device including a specifying section (aspect ratio changing section 212) that, with reference to description information (MPD data 221) in which a basic region that is a display object in the displayable range and a plurality of adjacent regions (additional region) that are regions in the displayable range adjacent to the basic region and with different shapes to one another are defined, specifies the adjacent region combined with the basic region; and a display control section (reproduction section 213) that sets a part corresponding to a region as a display object in which the basic region and the adjacent region specified by the specifying section are combined.

According to the configuration, the adjacent region combined with the basic region is specified with reference to the description information by which the basic region and the adjacent region adjacent to the basic region are defined. The part corresponding to the region is set as the display object in which the specified adjacent regions and the basic region are combined.

Here, according to the configuration, a plurality of adjacent regions is defined, and the shape of each region is mutually different. Therefore, the shape of the region in which the basic region and the adjacent region are combined, that is, aspect ratios, is different according to whether the adjacent region specified as the region combined with the basic region is any of the plurality of adjacent regions. Therefore, according to the configuration, an effect is exhibited where adaptively changing the aspect ratio is enabled.

A distribution device according to Aspect 2 of the invention that distributes description information (MPD data 221) for content display control to a display control device (reproduction device 200) that sets at least a portion of a displayable range that is a range of content able to be displayed on one screen as a display object, in which the description information defines a basic region that is a display object in the displayable range, and a plurality of adjacent regions in the display range that are adjacent to the basic region and with different shapes to one another.

According to the configuration, description information that defines the basic region that is the display object in the displayable range and a plurality of adjacent regions that are regions within the displayable range that are adjacent to the basic region and with different shapes to one another is distributed to the display control device. Thus, an effect is exhibited where it is possible for the aspect ratio to be adaptively changed on the display control device.

The description information distributed by the distribution device according to Aspect 3 of the invention may define the basic region and the adjacent region with one vertex of the displayable range that is a rectangle as a reference.

According to the above-described configuration, the displayable range is rectangular. Thus, by setting one vertex as the reference, it is possible to concisely define the basic region and the adjacent region. That is, according to the above-described configuration, it is possible for the description information by which the basic region and the adjacent region are concisely defined to be distributed to the display control device.

The description information distributed by the distribution device according to Aspect 4 of the invention defines the basic region with one vertex of the rectangular basic region as a reference, and defines the rectangular adjacent region that shares a side with the basic region with the vertex as a reference.

According to the configuration, the basic region and the adjacent region are rectangles, and the basic region and the adjacent region share a side. Thus, it is possible for the aspect ratio to be changed according to the combination of the basic region and the adjacent region. Because an adjacent region with a different shape is also defined, it is possible to set a different aspect ratio according to the combined adjacent region. Since the basic region and the adjacent region are defined with one vertex of the basic region as the reference, extending the adjacent region is easy. For example, in a case where it is possible to acquire content outside the displayable range, defining an adjacent region that extends up to outside the displayable range is also easy.

In the description information, an adjacent region that does not share a side with the basic region may be further defined. In this case, when combined with an adjacent region that shares a side with the basic region, display of various aspect ratios is further possible by being further combined with an adjacent region that does not share a side with the basic region.

The description information distributed by the distribution device according to Aspect 5 of the invention may define the basic region and the adjacent region through a combination of unit grids that segment the displayable range that is a rectangle in a grid form.

According to the configuration, since the basic region and the adjacent region are defined by the combination of unit grids, it is possible to concisely define the basic region and the adjacent region. That is, according to the above-described configuration, it is possible for the description information by which the basic region and the adjacent region are concisely defined to be distributed to the display control device.

The data structure according to Aspect 6 of the invention is a description information data structure referenced by the display control device in order to specify the part set as the display object from the displayable range that is the range of content displayable on one screen, and includes information that defines the basic region that is the display object in the displayable range and information that defines a plurality of adjacent regions that are regions within the displayable range adjacent to the basic region and with different shapes to one another. Thus, the same actions and effects as the display control device are exhibited by providing the data structure to the display control device.

A display control method according to Aspect 7 of the invention executed by a display control device that sets at least a portion of a displayable range that is a range of content able to be displayed on one screen as a display object, includes a specifying step (S5) that, with reference to description information (MPD data 221) in which a basic region that is a display object in the displayable range and a plurality of adjacent regions (additional regions) that are regions in the displayable range adjacent to the basic region and have different shapes to one another are defined, specifies the adjacent region combined with the basic region; and a display control step (S7) that sets a part corresponding to a region as a display object in which the basic region and the adjacent region specified by the specifying section in the displayable range are combined. Thus, according to the display control method, the same actions and effects as the display control device are exhibited.

The display control system (distribution system 300) according to Aspect 8 of the invention includes the display control device and the distribution device, and the display control device performs display control with reference to the description information distributed by the distribution device. Thus, according to the display control system, the same actions and effects as the display control device are exhibited.

### [Reference Example]

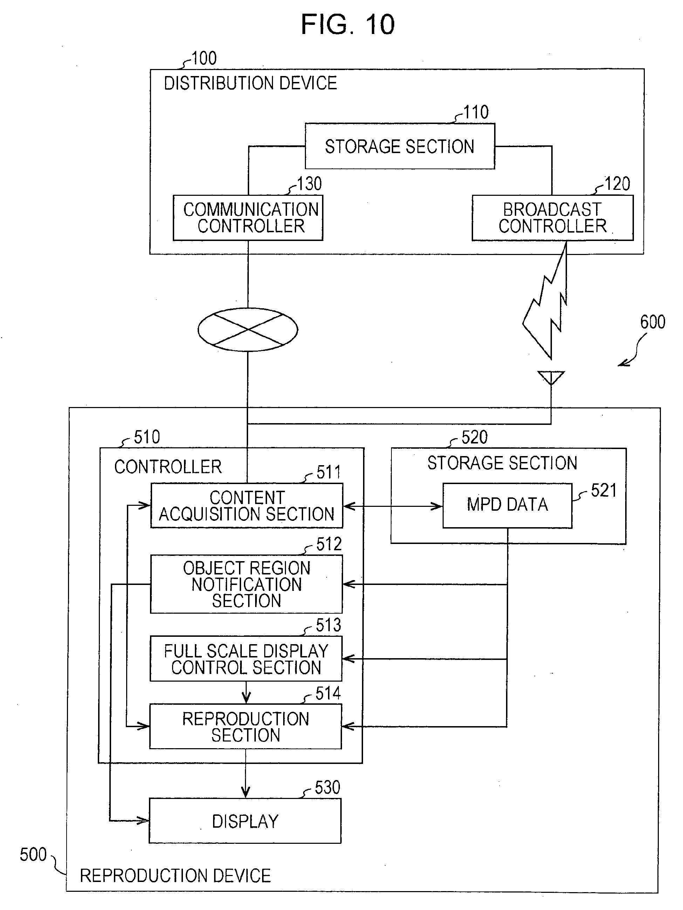

Next, a reference example of the invention will be described based on Figs. 10 to 17. In each of the embodiments, although an example of adaptively changing the display aspect ratio of the content with reference to the MPD data is illustrated, in the reference example, an example of adaptively changing the viewing angle of the content with reference to the MPD data will be described. The same configurations and the above-described embodiment are given the same reference numerals and description thereof will not be repeated.

### <Overview of System: Fig. 10>

First, a configuration of the distribution system 600 according to the reference example will be described based on Fig. 10. Fig. 10 is a block diagram illustrating a configuration of the main portions of the distribution device 100 and the reproduction device 500 that configure the distribution system 600.

The distribution system 600 is a system in which the reproduction device 500 receives and reproduces content distributed by the distribution device 100. In the distribution system 600, it is possible to perform distribution of the content using both a communication network and a broadcast network similarly to the distribution system 300 of the above-described embodiments. The configuration of the distribution device 100 is also the same as the above-described embodiments. However, the MPD data stored in the storage section 110 of the distribution device 100 and distributed by the reproduction device 500 differs from the above-described embodiments.

The reproduction device 500 is a device that reproduces content distributed from the distribution device 100, and includes a controller 510 that performs overall control of the operation of the reproduction device 500, a storage section 520 that stores data used by the reproduction device 500, and a display 530 that displays an image according to the control of the controller 510. A content acquisition section 511, an object region notification section 512, a full scale display control section 513, and a reproduction section 514 are included in the controller 510, and MPD data (description information) 521 is stored in the storage section 520. The display 530 and the storage section 520 may be devices external to the reproduction device 500 that are connected to the reproduction device 500.

The content acquisition section 511 acquires the content and the MPD data from the distribution device 100. The content and the MPD data are acquired using a communication path, a broadcast path, or using both paths. The acquired MPD data is stored as MPD data 521 in the storage section 520. For example, it is possible to acquire the images and audio of content and the MPD data with the broadcast path, and to acquire necessary components (such as subtitle data) based on the acquired MPD data with the communication path. A portion or all of the MPD data and the content may be acquired from devices other than the distribution device 100.

The object region notification section 512 presents the user of the reproduction device 500 with the object region that is the object of the full scale display for the content during display (reproduction).

The full scale display control section 513 causes the reproduction section 513 to reproduce the content corresponding to the object region when the object region is selected. The content corresponding to the object region is content according to the display screen size of the display 530, and is content that becomes the full scale display.

The reproduction section 513 reproduces the content acquired by the content acquisition section 511. More specifically, the reproduction section 513 causes the display 530 to display the content corresponding to the object region (full scale display content) instead of the content reproduced thereto when the object region is selected during reproduction of the content.

The MPD data 221 is description information (metadata) that is referenced for acquisition and reproduction of the content, and combinations of reproducible components and the like are described for each reproduction period (Period) of the content. The MPD data 521 of the reference example has the main feature point of including information for specifying the content with a viewing angle according to the size display screen size of the display 530.

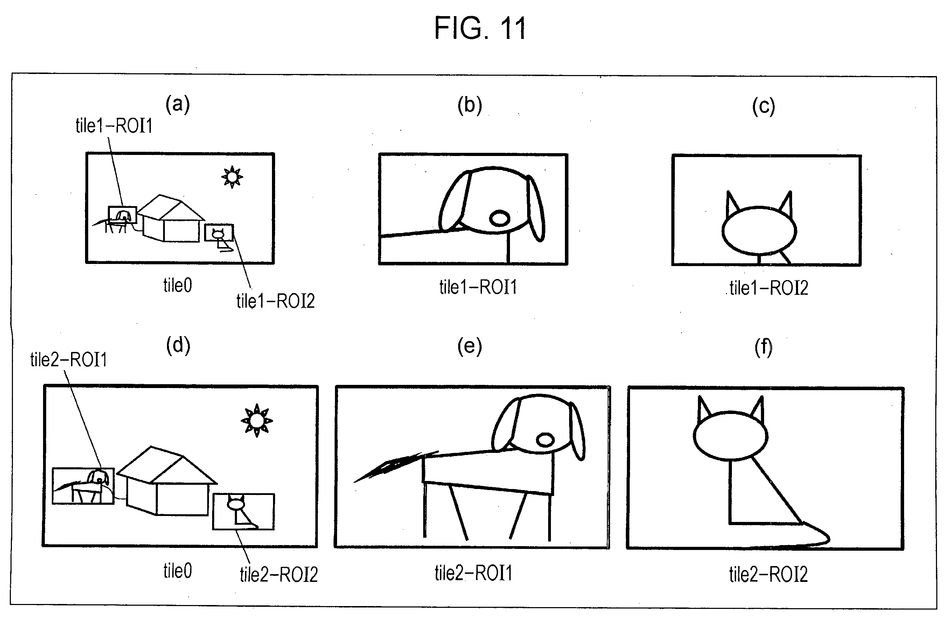

### <Change of Viewing Angle: Fig. 11>

It is possible to perform display at a viewing angle according to the display screen size by referencing the MPD data of the reference example. More specifically, it is possible to perform display at full scale (actual size) regardless of the size of the display screen. This will be described based on Fig. 11. Fig. 11 is a diagram illustrating examples of full scale display according to differing display screen sizes.

Fig. 11(a) illustrates an example of a normal display in a case where the display screen size of the display 530 is 70 inches. As illustrated in the drawings, in the case of normal display, the range of tile0 (below, referred to as the basic region) of the content is displayed on the full screen. In the case of normal display, as illustrated in the drawing, the region (below, referred to as an object region) that is the object of full scale display of the content is surrounded with a frame or the like and presented to the user. In the example, two object regions (tile1-ROI1, tile1-ROI2) are presented.

In the normal display state, the image of the object region is displayed at full scale by selecting any of the object regions. That is, in a case where the object region tile1-ROI1 is selected, the image of the object region is displayed at full scale as illustrated in Fig. 11(b). Similarly, in a case where the object region tile1-ROI2 is selected, the image of the object region is displayed at full scale as illustrated in Fig. 11(c). The method of selecting the object region is not particularly limited. For example, the object region may be selected by pointing with a pointing device such as a mouse, or a desired object region may be selected by the focus of the object region being moved by a remote control provided with a key or the like designating direction.

Meanwhile, Fig. 11(d) illustrates an example of a normal display in a case where the display screen size of the display 530 is 100 inches. As illustrated in the drawings, in the case of normal display, the range of the basic region (tile0) of the content is displayed on the full screen. The range of the basic region is that same as the case of Fig. 11(a). In the example in Fig. 11(d), two object regions (tile2-ROI1, tile2-ROI2) are presented similarly to the Example in Fig. 11(a). Since these object regions are regions displayed at full scale on a 100 inch display screen, the range becomes wider than the object regions (tilel-ROI1, tile1-ROI2) in Fig. 11(a).

In the normal display state, the image of the object region is displayed at full scale by selecting any of the object regions. That is, in a case where the object region tile2-ROI1 is selected, the image of the object region is displayed at full scale as illustrated in Fig. 11(e). Similarly, in a case where the object region tile2-ROI2 is selected, the image of the object region is displayed at full scale as illustrated in Fig. 11(f). As is evident when compared to the examples in Figs. 11(b) and 11(c), in the large display screen size examples in Figs. 11(e) and 11(f), the range displayed at full scale becomes wider.

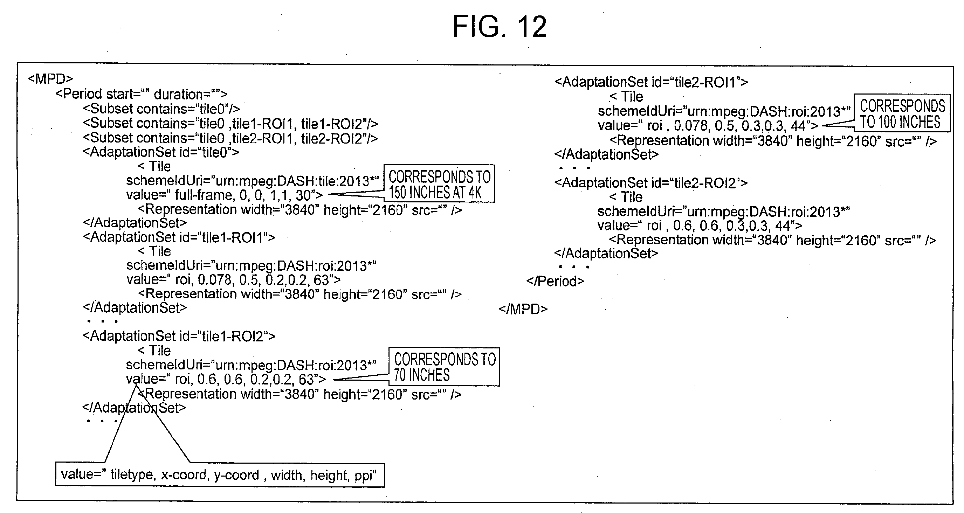

### <Example of MPD Data: Fig. 12>

The example of the MPD data 521 that enables adaptively changing the viewing angle in this way will be described based on Fig. 12. Fig. 12 is a diagram illustrating a description example (data structure) of the components of MPD data 521 that enables an adaptive change in viewing angle.

In the MPD data 521 in the drawing, variations on combinations of the above-described regions (basic region and object regions) is defined according to a subset (Subset) that is elements indicating objects reproducible at the same time. Specifically, a combination of the basic region tile0, the object region tile1-ROI1, and the object region tile1-ROI2 is defined. As described above, the combination is a combination for use at 70 inches. A combination of the basic region tile0, the object region tile2-ROI1, and the object region tile2-ROI2 is defined. As described above, the combination is a combination for use at 100 inches.

In the MPD data 221 in the drawing, the necessary information for display of each region (tile) is described in the elements of the adaptation set (AdaptationSet). Specifically, the position and range of the region are indicated by the x and y coordinates (x-coord, y-coord) of the upper left end of the region, and the width and height of the region stored in the value (value) included in the element. The coordinates are coordinates in a coordinate system where the upper left end (reference position) of the full frame region is the origin point (0, 0), the upper right end of the region is (1, 0), and the lower left end of the region is (0, 1). The width and height of the region are represented by the ratio to the width and height of the full frame region.

Whether the region is the region that displays the full frame (full-frame) image or is a region (roi) corresponding to full scale display is indicated by the type of tile (tiletype) described in the value.

Whether the object region corresponds to the any of the display sizes is indicated by the scale factor (scale factor) described in the value for the object region. In the example, although the scale factor is indicated by pixels per inch (ppi), the unit is not limited to ppi as long as the scale factor is able to specify whether the object region corresponds to any display size.

Specifically, value = "full-frame, 0, 0, 1, 1, 30" is described in the adaptation set of tile0 in Fig. 12. In light of this description, it is possible to specify that the basic region (tile0) is a full frame region, the coordinates of the upper left end are (0, 0), and that the height and width are one times the full frame region, respectively. The scale factor is described as 30. In a case where 4K (resolution in the horizontal direction of approximately 4000) content is displayed on a 4K compliant display 530, if the size of the display 530 is 150 inches, the ppi = 30.

Value = "roi, 0.078, 0.5, 0.2, 0.2, 63" is described in the adaptation set of the object region (tile1-ROI1) in the drawing. In light of this description, it is possible to specify that the object region (tile1-ROI1) is the object region of full scale display, the coordinates of the upper left end are (0.078, 0.5), and that the height and width are 0.2 times the full frame region, respectively. In light of the description of 63, it is possible to specify that the object region (tile1-ROI1) is a region set for use at 70 inches. This is because 63 ppi corresponds to 70 inches in a case of 4K (both the content and the display 530 are 4K).

Value = "roi, 0.078, 0.5, 0.3, 0.3, 44" is described in the adaptation set of the object region (tile2-ROI1) in the drawing. In light of this description, it is possible to specify that the object region (tile2-ROI1) is the object region of full scale display, the coordinates of the upper left end are (0.078, 0.5), and that the height and width are 0.3 times the full frame region, respectively. The width and height are enlarged compared to the tile1-ROI1 in order to correspond to a larger display size. In light of the description of 44, it is possible to specify that the object region (tile2-ROI1) is a region set for use at 100 inches. This is because 44 ppi corresponds to 100 inches in a case of 4K (both the content and the display 530 are 4K).

In this way, in the MPD data 521 in the drawing, the value of ppi is described as a scale factor for each object region. Thus, it is possible for the reproduction device 500 to select the object region described by the value of ppi according to the display size of the display 530 from the plurality of object regions. For example, in a case where the display 530 has a 4K compliant display size of 100 inches, since it is possible to specify the scale factor of the display 530 as ppi = 44 when acquiring 4K content, it is possible to select tile2-ROI1 or tile2-ROI2. In the MPD data 521 in the drawing, it is understood that 4K content is acquired from the description of Representation width = "3840" height = "2160".

When the object region is selected, content (content for full scale display of the object region) specified by the value (URL) of src described in the element of Representation of the selected object region is acquired and reproduced. In so doing, the reproduction object is switched from the basic image to the full scale image of the object region.

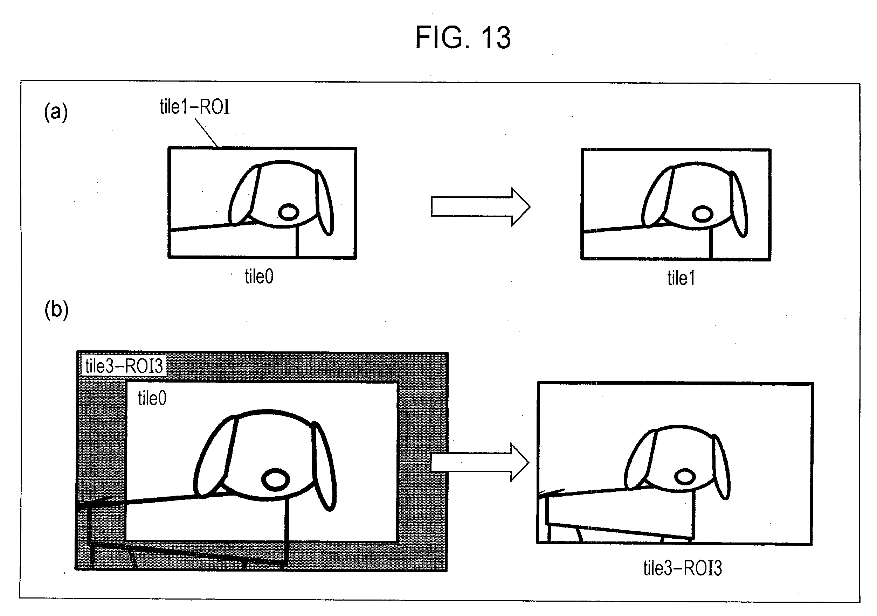

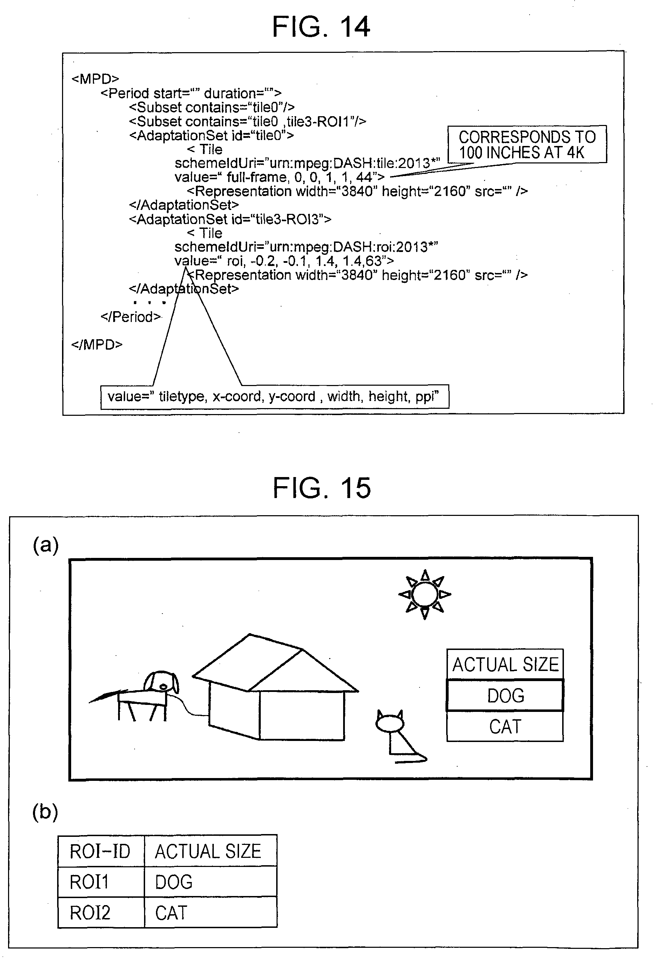

### <Actual Size of Display of Wider Object Region than Basic Region: Figs. 13, 14>

Above, although an example in which an object region with a narrower range than the basic region is displayed full scale is described, an example in which an object region with a wider range than the basic region is displayed at full scale will be described based on Figs. 13 and 14.

Fig. 13 is a drawing showing an example in which a wider object region than basic region is displayed at full scale. In Fig. 13(a), an example of a case where the object region with the same range as the basic region is set is illustrated for comparison. The size of the display 530 is assumed to be 70 inches. As illustrated in Fig. 13(a), in a case where the object region (tile1) with the same range as the basic region is set, there is no change in the displayed image even in a case of performing normal display (display of the basic region) or in a case of performing full scale display (display of tile1). This is because the image of the basic region also becomes full scale.

In contrast, in the example in Fig. 13(b), an object region (tile0-ROI3) on the outer side of the basic region (tile0) is set. In the example in Fig. 13(b), the size of the display 530 is assumed to be 100 inches. Here, the grey background pattern in the drawing indicates a region outside the display object. That is, only the part superimposed on the basic region from the object region (tile0-ROI3) becomes the display object, and part outside this are not displayed. Although the content (range) of the image displayed in the basic region is the same as Fig. 13(a), the size of the image displayed is larger than Fig. 13(a) by the mount that the size of the display 530 is larger. That is, in the example on the left side of the Fig. 13(b), the image is displayed enlarged greater than full scale.

In the example in Fig. 13(b), when the object region (tile0-ROI3) is designated and switched to full scale display, the image of the object region (tile0-ROI3) is displayed full screen as illustrated on the right side in Fig. 13(b). When compared to the example on the right side of Fig. 13(a), although both are full scale display, the range of the image displayed becomes larger in Fig. 13(b) by the amount that the size of the display 530 is larger.

Here, an example of the MPD data 521 in which a wider object region than the basic region is defined will be described based on Fig. 14. Fig. 14 is a diagram illustrating a description example (data structure) of the components of MPD data 521 in which an object region with a wider range than the basic region is defined.

In the MPD data 521 in the drawings, the combination of the tile0 and the tile3-ROI3 is defined according to the element of the subset. The tile0 is defined similarly to the example in Fig. 12. In the example in Fig. 14, although the value becomes ppi = 44 for tile0 and is different to ppi = 30 in the example in Fig. 12, this is because the content of the reproduction target differs from the example in Fig. 12. The tile3-ROI3 is defined as a wider region than the basic region (tile0) (the values of the coordinates x, y at the apex are negative, and the width and height are greater than 1) by the description of the value.

In a case of a wider object region than the basic region, the user is unable to recognize the object region by displaying rectangle in the basic region as in Figs. 11(a) and 11(d). Therefore, for example, an image indicating the relationship between the position and size of the basic region and the object region as illustrated on the left side in Fig. 13(b) may be generated and displayed. In so doing, the user identifies the presence of a wider object region than the basic region, and it is possible for the object region to be selected, as necessary, and displayed full scale. Naturally, the method of presenting the object region to the user is not limited to the example.

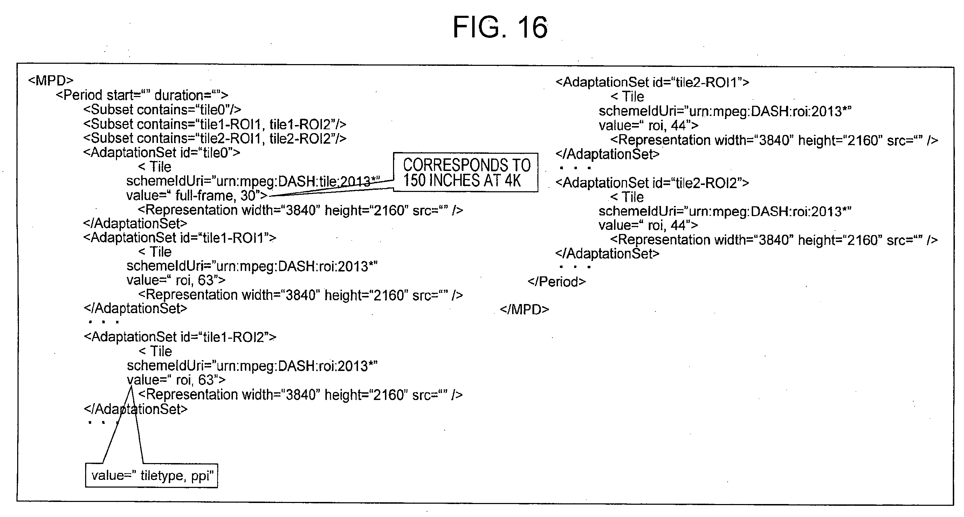

### <Selection of Object Region: Figs. 15, 16>

Above, although an example of selecting the object region by selecting within the region of the rectangle indicating the object region is illustrated, a desired object region may be selected by the user by displaying object region selection choices. This will be described based on Figs. 15 and 16.

Fig. 15 is a diagram illustrating an example in which a desired region is selected by a user by displaying selection choices of object regions. In the example in Fig. 15(a), although the same image as Fig. 11(a) is displayed, the rectangle that is different to Fig. 11(a) and indicates the object region is not displayed. Instead, the text "dog" and "cat" are displayed as the object region selection choices, and it is possible to match a cursor to either of these texts.

Such a display can be realized by using the information as illustrated in Fig. 15(b). In Fig. 15(b), the ROI-ID that is the identification information of the object region and the text indicating the object region indicated by the ROI-ID are associated. By sending the information to the reproduction device 500, it is possible for the text string indicating the object region indicated by the ROI-ID to be displayed on the reproduction device 500 instead of the ROI-ID specified with reference to the MPD data 521. As long as it is possible for the user to recognize the present of the object regions, the object region selection choices may be displayed with the ROI-ID as the selection choice. However, because it is difficult for the user to recognize whether either region in the ROI-ID display is displayed full scale, it is desirable to perform display indicating whether either of the regions is displayed full scale as in the example.

Here, an example of the MPD data 521 used in a case of displaying the object region selection choices will be described based on Fig. 16. Fig. 16 is a diagram illustrating a description example (data structure) of components of MPD data 521 used in a case of displaying selection choices of object regions.

The MPD data 521 in the drawing is the same as the example in Fig. 12 except for the point that the information indicating the position and range of the region (basic region and object region) is omitted from the value of value. The reason for this to be omitted is that displaying a rectangle indicating the object region is unnecessary in a case of displaying the object region selection choices as in Fig. 15.

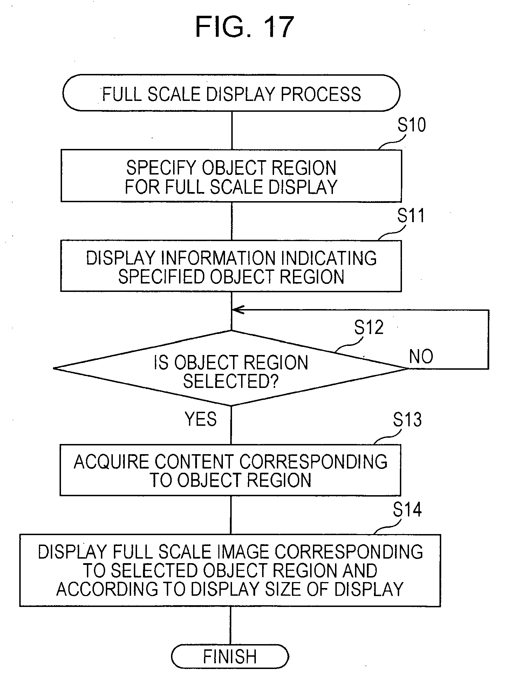

### <Flow of Actual Size Display Process: Fig. 17>

Next, the flow of the full scale display process executed by the reproduction device 500 will be described based on Fig. 17. FIG. 17 is a flowchart showing an example of the process of full scale display. In the drawing, a process in a state where the content acquisition section 511 acquired the content and the MPD data 521 for reproducing this content, and the part of the basic region (tile0) of the content is displayed on the display 530 by the reproduction section 514.

The content corresponding to regions other than the basic region is acquired at the point in time the content is selected as the object that is displayed. For example, in a case where the adaptation set for 100 inch use is selected, the full scale display content for 100 inches is acquired, and in a case where the adaptation set for 70 inches is selected, the full scale display content for 70 inches is acquired. The acquisition path of each content item is not particularly limited, and a plurality of paths may be combined and the content acquired.

First, the object region notification section 512 specifies the object region of actual display with reference to the MPD data 521 (S10). For example, in a case of referencing the MPD data 521 in Fig. 12, the object region is specified by searching for the tile for which the type of tile (tiletype) is "roi", and reading out the coordinates, width, and height of the detected tile.

Next, the object region notification section 512 causes information indicating the specified object region to be displayed on the display 530 (S11). The displayed information is not particularly limited as long as the user is able to identify the object region, and a rectangle indicating the outer frame of the object region as in the example in Fig. 11 may be displayed. In a case where the information (text string) indicating the object region is associated with the object region as in the example in Fig. 15, this information (text string) may be displayed.

The full scale display control section 513 determines whether the object region is selected during display of the image (during reproduction of a moving image) (S12). In a case where it is determined that the object region is selected (Yes in S12), the full scale display control section 513 acquires the full scale image corresponding to the selected object region and according to the display size of the display 530 from the server (for example, distribution device 100)(S13), causes the acquired content to be displayed by the reproduction section 514 (S14), and thereby finishes the full scale display process.

### [Modification Example]

In the examples above, although an example that defines the regions according to the position of the vertex of the upper left corner of the region (basic region and object region) and the width and height of the region is illustrated, the method of defining the regions is not limited to this example. For example, in a case where the region is a rectangle, the region thereof may be defined by information (for example, coordinates) indicating the position of two opposing vertices.

### [Overview of Reference Example]

The reproduction device 500 (display control device) is a display control device that causes content to be displayed on a display device (display 530), and is provided with a specifying section (full scale display control section 513) that specifies content according to the screen size of the display device on which the content is displayed with reference to the description information (MPD data 521) that indicates the content for full scale display according to the display screen size of the display device and a display control section (reproduction section 514) that causes the content specified by the specifying section to be displayed.

According to the configuration, it is possible for content (content that becomes full scale display by being displayed on the display device) with a viewing angle according to the display screen size of the display device to be displayed. That is, an effect is exhibited in which it is possible for the content to be displayed as a viewing angle adapted to the display screen size of the display device.

### [Supplemental Item 1]

Embodiment 1 of the invention provides an example of a description format of a region that describes the coordinate position and size of each region (basic region, additional region) using the value of the ratio to the full frame region as the description format of the description information (metadata, MPD data) that describes the partial region. Embodiment 2 provides an example of a description format of a region in which grids (grid) that divide the full frame region are separately defined, and the number of grids and index value are used. As also mentioned in Embodiment 2, as the description format in which the description information (metadata, MPD data) can be obtained, a description format that describes the region using the actual image size (resolution, number of pixels) is also possible in addition to the above. In contrast to the value (actual value) of the actual image size, the values handled in Embodiments 1 and 2 are logical values normalized at the full frame size.

Here, the advantage when describing the region with the actual values and the advantage of describing with logical values will be described using an operation example of a typical partial picture distribution application such as sequentially selecting, reproducing and displaying a partial region picture from the full frame picture.

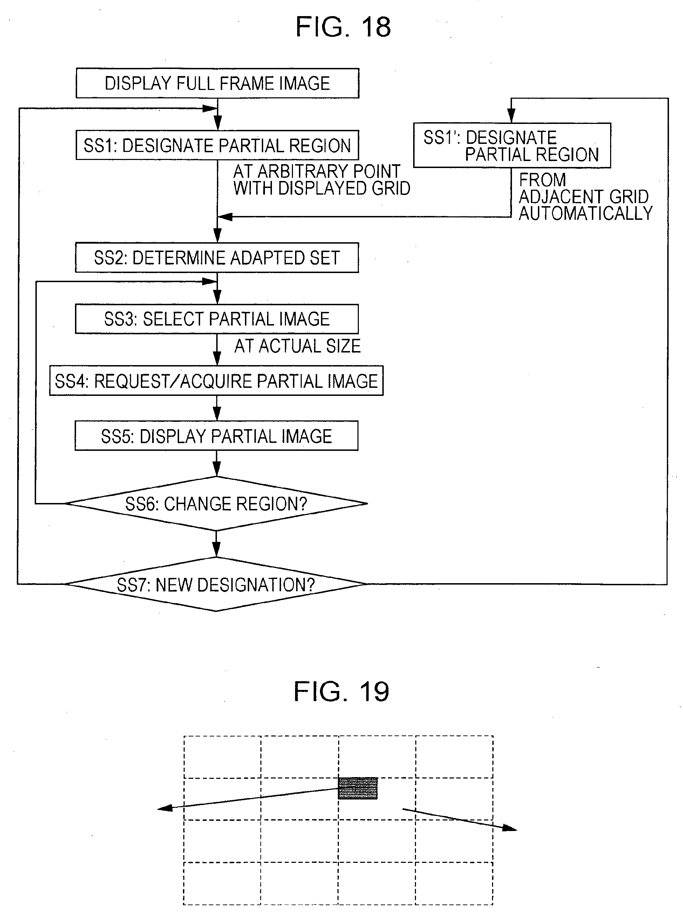

Fig. 18 is an operation flow example of a typical partial picture distribution application.

First, the partial region (tile) is designated with respect to the displayed full frame picture (display of the full frame image is not necessary) (SS1). At this time, designation of the partial region may be with either of a method in which a tile frame line representing the partial region is displayed on a plurality of screens, and selects and designates the partial region therefrom or a method that designates an arbitrary screen position with a button and designates a partial region tile that includes this position or may be another appropriate designation method. Next, the adaptation set (Adaptation Set) corresponding to the designated partial region tile is determined (SS2). Thereafter, the Representation having the desired resolution (number of pixels) is selected from the representation (Representation) described in the determined Adaptation Set (SS3), and this is requested and acquired (SS4). The designation, determination, and request are executed by referencing the value of the parameters described in the MPD data. Below, reproduction and display of the partial region indicated by the Representation (SS5) and changing of the partial region (SS6, SS7) are performed.

The above operation flow is an operation flow suitable to MPD data written with logical values.

For example, there are partial region tiles with two different sizes as illustrated in Fig. 19. These tiles are partial region tiles with different numbers of divisions with respect to the full frame, that is are a 16 division tile and a 64 division tile. A case where the partial pictures of these tiles are distributed to and displayed on terminals with different display resolutions is considered. In this example, distribution is performed to terminals with the two resolutions, 960 x 540 and 1920 x 1080.

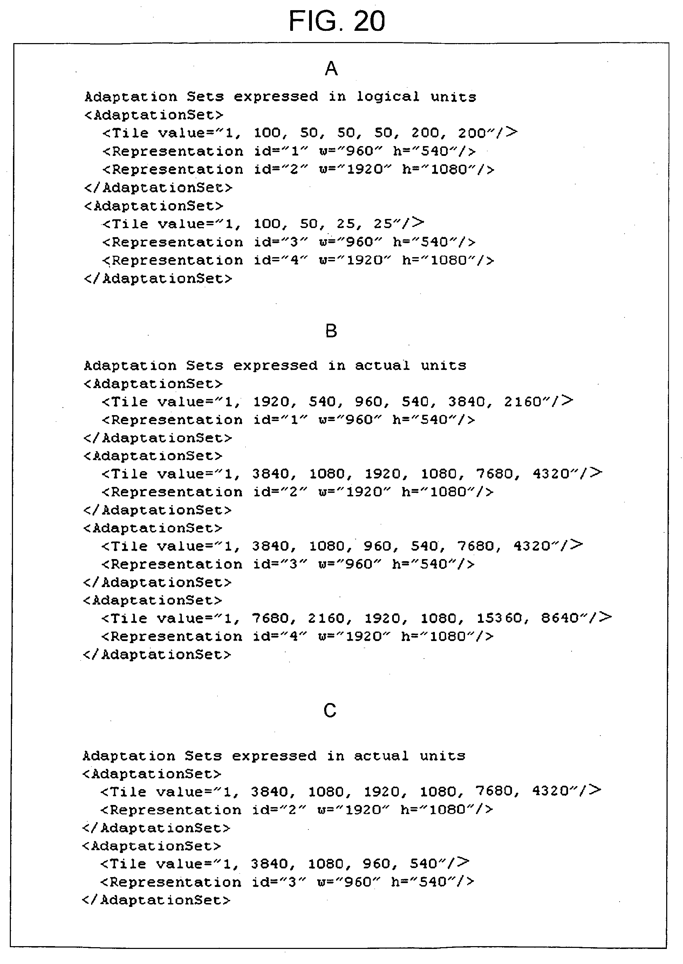

Fig. 20A shows an example of MPD data written with logical values. The full frame region is set to a 200 x 200 grid and the 16 division region tile and the 64 division region tile are represented at 50 x 50 and 25 x 25, respectively. For simplicity, unnecessary parameters are omitted, as appropriate, in the description. Although the number of grids (resolution of full frame) of the full frame is described in the tile element, because the number of grids of the full frame becomes shared, the number of grids of the full frame is described only in the first Adaptation Set, and is not repeated in the remaining Adaptation Set. In the MPD data in Fig. 20A, the selection process is concisely executed by first specifying the Adaptation Set that is the partial region tile from the parameters of the tile position and size included in the value of the tile element, and next specifying actual size from the size parameter (w, h) of the Representation included in the Adaptation Set.

Meanwhile, an example of the MPD data in which the same content is described with actual values is illustrated in Fig. 20B. In a case of being described with actual values, because the partial region tiles with the same logical positions and size and different actual sizes to one another are described as separate Adaptation Sets for which the size of the full frame region is different (first and second Adaptation Set, and third and fourth Adaptation Set in Fig. 20B), the values are unable to be summarized and written as in a case of being described with logical values. The sixth and seventh parameters included in the value of each of the tile elements in Fig. 20B are parameters representing the size of the full frame region. That is, although writing the size of the full frame to the tile element is not necessary in Embodiments 1 and 2, when describing the partial region tile formed from full frames having different sizes with actual values, describing the size of the full frame becomes necessary. In order to specify the position of the partial region tile (relative positions with respect to logical position and full frame) with the MPD data described with actual values in the MPD data, because the necessity arises of determining the tile with either of the position or size the size of the full frame described in the Adaptation Set while analyzing the size, tile size and coordinate position of the full frame described in the Adaptation Set one by one, the selection process of the partial region and partial image becomes more complicated basically than a case of the MPD data described with logical values.

Above, although the advantage of MPD data described with logical values compared to actual values was described in the foregoing description, there are examples where it is possible for the MPD data described with actual values to more simplify the selection process in limited cases. This example is illustrated in Fig. 20C.

In the examples described up to now with the operation flow diagram in Fig. 18 and the concept drawing in Fig. 19, a process of allocating a partial picture with a different resolution to the designated partial region tile and combining and selecting with the resolution of the output destination terminal is included. Without this process, it is possible to further simplify the selection process of the partial picture, as long as the full scale partial picture described in the value of the tile element is able to be selected as is. That is, if the above conditions are achieved, the process of determining the Adaptation Set (SS2) and the process of selecting the Representation (SS3) in Fig. 18 become equivalent, and it is possible to not perform selection of the Representation. This achieves the conditions of making all of Adaptation Sets and partial region tiles described in the MPD data tiles cut out from the full from a picture with a single resolution, and outputting the partial region tile and partial picture with the resolution unchanged. (Naturally, it does not matter if the terminal resizes the output partial picture afterwards.)

Fig. 20C is an example of MPD data in which the partial region tile is described with actual values, and two partial region tiles (16 division region tile, 64 division region tile) are described as two tiles at 1920 x 1080 and 960 x 540 cut out from a shared full frame with a resolution of 7680 x 4320. In this example, because of the full frame resolution is shared, the full frame resolution is described in the first Adaptation Set only, and the remaining Adaptation Set omits the description. In the example, since the pixel sizes w = "1920", h = "1080" and w = "960" h = "540" of the partial picture described in the Representation are the same size, selection of the Representation is served by selecting the tile size, that is, it is possible to not select the Representation.

In order to take full advantage of the advantage of when the description information (metadata, MPD data) is written with actual values, it is desirable to be able to simply determine whether the above conditions are achieved, that is, whether the description information is written with actual values, whether the position and the unit of the size written to the description information are the pixel size, and whether it is possible to thereby omit the selection process of the partial picture (Representation) at a later stage. Therefore, a one-bit identifier formed that indicates achievement of the conditions defined and added to the description information. The identifier formed is an example, and, for example, an identifier direct or the like indicating that the partial picture (Representation) is directly selectable from the position and size of the actual value written in the description information may be used. The identifier may describe value = "tyletype, formed, ..." as one parameter included in the value of the tile element, and describing a higher attribute of, for example, an MPD element can be described. Alternatively, a special denotation in which the pixel size such as 1920p, 1080p is described as the width and height values included in the value may be used. More precisely, it goes without saying that this denotation represents not only the pixel size, but also indicates a tile cut out from a single resolution full frame. Furthermore, a method of performing determination with the file name of the MPD data is also possible. In so doing, determination of the necessary process during partial picture distribution is performed. Naturally, binding is also possible during operation by providing a restriction on the range written with actual values by stipulating a specification, such as a profile.

### [Supplemental Item 2]

The description information (MPD data) illustrated with each of the first to third embodiments of the invention has an advantage of utilization in defining a partial region of the basic region and the additional region and the like in which the full frame region is divided along the entirety of the full frame region, and selecting these, as appropriate, for display. Such a partial region is referred to here as A Part of Whole full-frame (POW). Meanwhile, the display information (MPD data) illustrated in the reference example of the invention has the advantage of utilization in projecting a subject (object) that is an object of interest in a portion of the full frame, and defining a particular partial region in the region where the object is present, and selecting this to be displayed. Such a partial region that includes the object of interest, that is, the region of interest, is referred to here as a Region of Interest (ROI).

These differ in the method of being used and the method of creation of the MPD data.

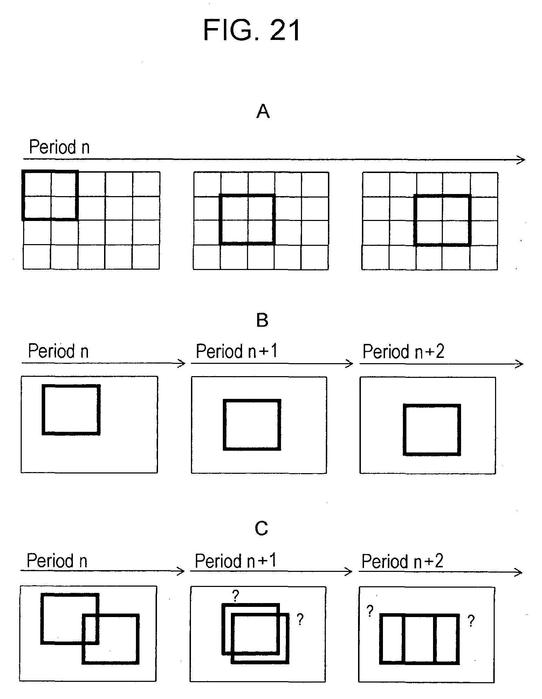

In the former (POW) case by the partial region tile being formed over the entirety of the full frame picture, and selecting this as appropriate, a method of use in which the partial region in which the object is actually projected is selected, as appropriate, and reproduced (Fig. 21A). At this time, selecting the partial region may be performed visually by a user or by a client terminal, or the distribution side may transmit and designate separate designation information in advance. Because all of the partial regions are defined over the entirety of the full frame picture, it is unnecessary to consider movement or changes of the object once the MPD data is generated.

Meanwhile, in the latter case (ROI), only the partial region tile in which the object (object of interest) is included is defined in advance, and this information is transmitted from the distribution side to the reception side. At this time, when the object moves within the screen, the position of the defined partial region tile also changes. Therefore, in the MPEG-DASH, by creating MPD data in which the reproduction period (Period) is divided by the number of time the position is changed is created, and defining the partial region tile for each of these Periods, the need to correspond to the movement of change of the object arises.

Because this does not mean that the neighboring partial region tiles are normally present as in the former (POW), an operation of selecting the tile, as appropriate as in the former (POW) is not able to be performed in the latter (ROI). Furthermore, in this case, although if there is one object there is also one ROI present in each Period, and the partial region tile present may be selected and reproduction continued across Periods (Fig. 21B), in a case where a plurality of objects and plurality of tiles of the region of interest (ROI) corresponding thereto are defined, if the correspondence relationship with the objects is not determined, selection may not be suitably performed (Fig. 21C).

In order to resolve these problems, an identifier object_index for identifying the object included in the tile (partial picture corresponding to the tile) is applied to each partial region tile (Adaptation Set) of the ROI described in the description information (MPD data), and the plurality of ROI partial region tiles included in the Period are distinguished. For example, value = "tyletype, object_index, ..." may be described as one parameter included in the value of the tile element, and it is possible to newly define the parameter as a separate attribute value parameter of the tile element or adaptation set element, and describe this in the element. By doing so, even when reproducing across Periods with the ROI partial region tile, continuously selecting the appropriate tile is possible.

Alternatively, a restriction is added to the order of the Adaptation Set written in the Period, and the Adaptation Set of the ROI partial region tile including the same object may be selectable by lining up in the same order. That is, if the first Adaptation Set is selected in the Period n, the same object is made continuously reproducible by automatically selecting the same first Adaptation Set in the Period n+1. Alternatively, the AdaptationSet of the ROI partial region tile that includes the same object may be made identifiable by including the same ID value (or a related ID value). This, that is, the ID identifier has a configuration that serves as the object_index identifier.

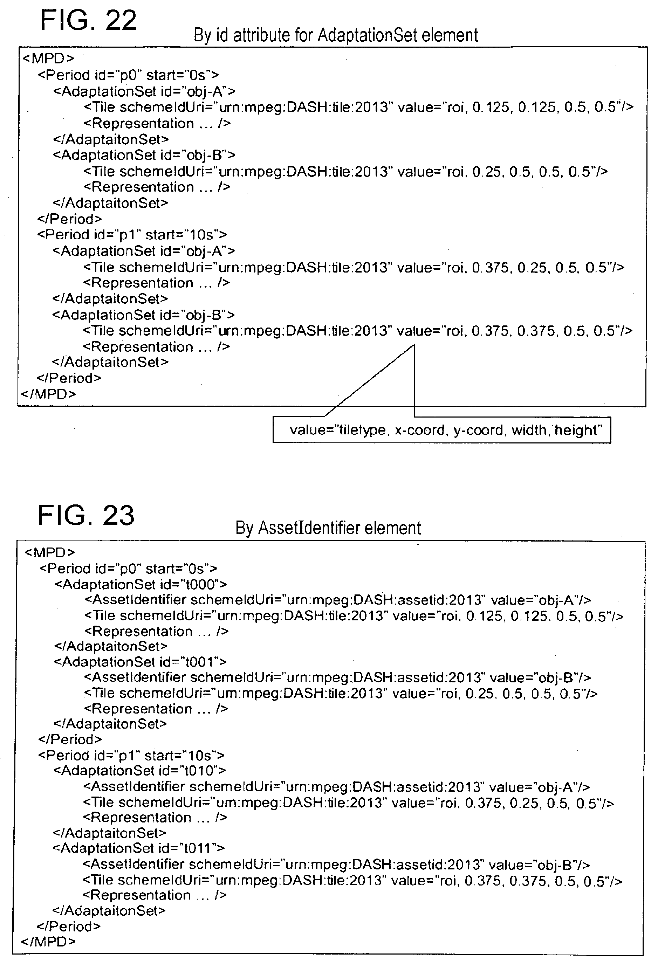

As the ID identifier included in the usable Adaptation Set in the object identifier, there is the ID identifier of the Adaptation Set element itself. Alternatively, in a case where the content is edited with two pictures, for example, a program picture and an advertisement picture connected in a nested fashion, adding an identifier (Asset Identifier) unique to each picture for identifying each added for each Period to the Adaptation Set element and using the identifier and the object identifier is also possible. Fig. 22 shows a description example of MPD data in which the ID identifier of the Adaptation Set element is used, and Fig. 23 shows a description example in which the Asset Identifier element that is the identifier unique to the picture is used. In the example in Fig. 22, the Adaptation Set having the same id = "obj-A" is included in a different Period (two Periods of id = "p0" and "p1" at different time periods), and these are continuously reproduced as tiles in which the same object is included. In the example in Fig. 23, the Adaptation set in which Asset Identifier having the same value (same value including the value of schemeldUri and the value of value) is described is included in a different period, and this is continuously reproduced as the tile in which the same object is included.

Embodiments such as using a Role descriptor for indicating the role such as main picture and sub-picture and a Viewpoint descriptor for indicating a viewpoint such as a left eye image and a right eye image which are addable to the Adaptation Set element as the object identifier and continuously selecting the Adaptation Set having the Role descriptor or the Viewpoint descriptor with the same value are also possible.

In the above description, although identification of the object is made basically unnecessary in the POW partial region tile, applying the same object_index identifier to the POW partial region tile and the element corresponding thereto is also possible. In the case of POW, in addition to the object_index identifier being treated as a parameter indicating the range of the tile present in the object, and being used in the selection of the tile, the object_index identifier can also be used a parameter indicating the priority during tile reproduction so that the tile included in the object when selecting and reproducing a plurality of tiles is reproduced with the definition raised.

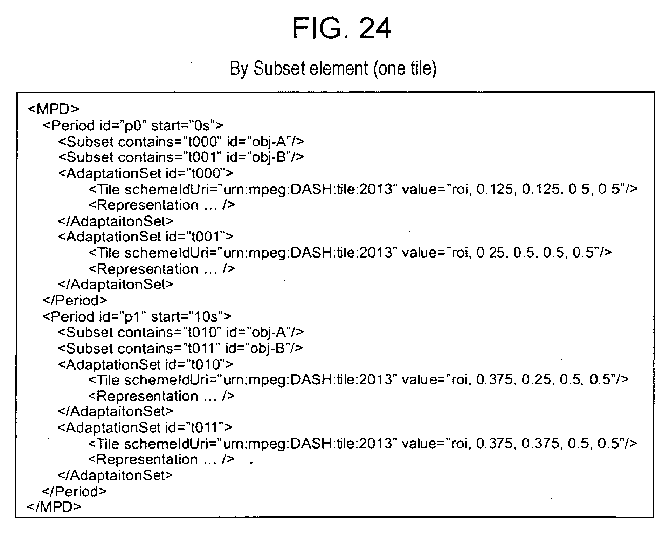

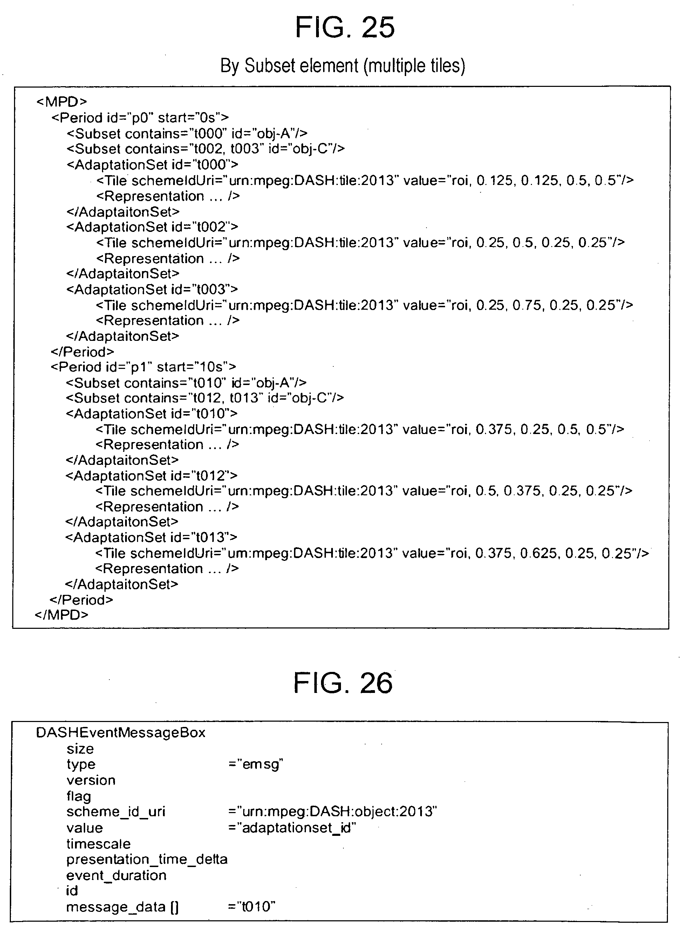

Furthermore, instead applying the object_index identifier to the plurality of tiles, that is, the Adaptation Set, describing a Subset element in which the Adaptation Sets that include the same object are summarized and described and applying the object_index representing the Subset can be similarly implemented. Furthermore, the ID identifier of the Subset element may be formed serving as the object_index identifier. This is structurally equivalent to summarizing and describing the tiles reproduced at the same time in order to represent display regions with different aspect ratios with the Subset in Embodiments 1 to 3, and is configured by interpreting the display regions with different aspect ratios as regions including the object, and adding the identifier of the object to the Subset element. Naturally, as already illustrated in Figs. 3, 6, 8, and 9, a Subset formed from one tile can also be described, and a Subset formed from one tile in which the object is included can be described and identified by applying an identifier. By writing the Subset element having the same value of the object identifier to a plurality of different Periods, one or a plurality of tiles = Adaptation Set that includes the same object can be selected and continuously reproduced. Fig. 24 shows a description example of MPD data in which the Subset element formed from one tile is included, and Fig. 25 shows a description example of MPD data in which the Subset element formed from a plurality of tiles is included. The Subset element ID identifiers, id = "obj-A", id = "obj-B", and id = "obj-C" are the object identifiers. In so doing, it is possible to select the Adaptation Set (the specified Subset) that includes the same object even in different Periods (two periods, id = "p0" and "p1" with different time periods) and possible to continuously reproduce the Adaptation Set. In this way, it possible to perform summary and description in a case where there is a plurality of tiles including the object in a description of the object tile using the Subset element, compared to a description using the ID identifier of the Adaptation Set element or the Asset Identifier element, and there is an effect in which handling becomes easy.

### [Supplemental Item 3]

Furthermore, as a special section that performs notification of the tile with the same object in different Periods, notification by an event message issued during notification at an unfixed time or by an in-band event message that stores event message information in the component data, and includes and transmits the designation information of the next tile during this is also possible. In MPEG-DASH that uses the ISO base media file format (ISO BM FF, the so-called MP4 format) in the segment that is the component data, a DASH Event Message Box is used in notification by the in-band event.

In the designation of the same object tile by the identification information in the MPD data illustrated with the Supplemental Item 2, it is necessary that the relationship between the tile and the object be fixed during MPD data distribution. However, in a case such as live picture distribution with a short time between image capture to distribution, detecting all of the objects in real time and forming and sequentially distributing the MPD data to which all of the object identification information is applied increases the processing burden on the transmission side and is substantially difficult. In such a case, notification is performed to the reception side by creating and distributing the MPD data (that is, the known MPD data) except for the identification information of the object, detecting the necessary object of the next Period in which the state of visual recognition during distribution, that is, which object is visually recognized is monitored and matched thereto, and the identification information of the next object tile is stored in the event message or the in-band event message. For example, in a case of MPEG-DASH for which the ISO BM FF is the segment data format, the DASH Event Message Box in which the object tile identification information corresponding to the final segment that forms one Representation of the Period during reproduction at the next Period is described is added and notification is performed as an in-band event message. Fig. 26 illustrates a description structure and description example of the DASH Event Message Box at this time. When the Representation of the AdaptationSet with id = "t000" is reproduced, the DASH Event Message Box in Fig. 26 is added to the final segment data, and the id of the object tile = Adaptation Set of the next Period is indicated with message_data = "t010". The value = "adaptationset_id" is indicated by the data being described with the id of the Adaptation Set. Naturally, as long as the transmission device is provided with sufficient processing capacity, and is sufficiently capable of detecting a plurality of objects, a process of monitoring the visual recognition state is not necessarily required, and a form may be adopted in which the identification information that identifies the next object tile in each component data item (segment data) when an object can be detected is stored, notification performed, and distributed as an in-band event message.

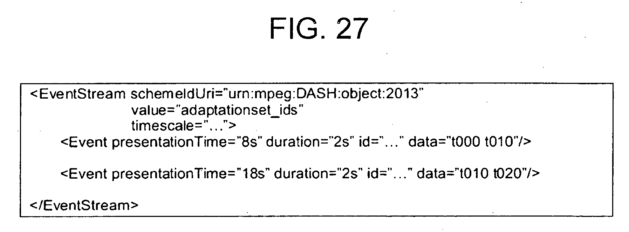

Fig. 27 is a description example of an event description described in the event messaged issued at an unfixed time. In the event message transmitted separately to the media data, the id of the tile that includes the same object in the Period before and after switching is described with a set. The value = "adaptationset_ids" is indicated by the data being described with the id of the Adaptation Set. The time information of the presentationTime, duration indicates the switching time of the Period and the effective time of the event. Alternatively, an aspect can be implemented in which notification of the event is performed by storing the event description illustrated in Fig. 27 stored in the MPD data, and frequently updating the MPD data.

### [Implementation Example through Software]

The control block (in particular, controllers 210 and 510) of the reproduction devices 200 and 500 may be realized through a logical circuit (hardware) formed by an integrated circuit (IC chip) or may be realized through software using a central processing unit (CPU).

In the latter case, the reproduction devices 200 and 500 include a CPU that executes commands of a program that is software that realizes various functions, a read only memory (ROM) or storage device (these are referred to as "storage media") in which programs and various data are recorded to be readable by a computer (or CPU), a random access memory (RAM) that expands the program, and the like. The advantages of the invention are achieved by the computer (or CPU) reading out and executing the program from the storage medium. It is possible to use a "non-temporary concrete medium", for example, a tape, disk, card, semiconductor memory, and a programmable logic circuit as the storage medium. The program may be supplied to the computer via an arbitrary transfer medium (such as a communication network or a broadcast wave) capable of transferring the program. The invention can be realized in a form of a data signal in which the program is realized by electronic transfer and embedded in a carrier wave.

The display control device according to each aspect of the invention may be realized by a computer, and, in this case, a display control device control program by which the display control device is realized with a computer the computer being caused to operate as each device provided in the display control device, and a computer readable storage medium on which the control program is recorded also fall within the scope of the invention.

The present invention is not limited to the above-described embodiments with various modifications being possible in the range disclosed in the claims, and embodiments obtained by appropriate combination of the devices disclosed in each of the different embodiments are also included in the technical range of the present invention. It is possible to form new technical features by the devices disclosed in each embodiment being combined.

### Industrial Applicability

It is possible to use the invention in a reproduction device or the like that reproduces content.

### Reference Signs List

- 100: distribution device
- 200: reproduction device (display control device)
- 212: aspect ratio changing section (specifying section)
- 213: reproduction section (display control section)
- 221: MPD data (description information)

## Claims

1. A display control device that sets at least a portion of a displayable range that is a range of content able to be displayed on one screen as a display object, the device comprising:
a specifying section that, with reference to description information in which a basic region that is a display object in the displayable range and a plurality of adjacent regions that are regions in the displayable range adjacent to the basic region and with different shapes to one another are defined, specifies the adjacent region combined with the basic region; and
a display control section that sets a part corresponding to a region as a display object in which the basic region and the adjacent region specified by the specifying section in the displayable range are combined.

2. A distribution device that distributes description information for content display control to a display control device that sets at least a portion of a displayable range that is a range of content able to be displayed on one screen as a display object,
wherein the description information defines a basic region that is a display object in the displayable range, and a plurality of adjacent regions that are regions in the display range adjacent to the basic region and with different shapes to one another.

3. The distribution device according to claim 2,
wherein the description information defines the basic region and the adjacent regions with one vertex of the displayable range that is a rectangle as a reference.

4. The distribution device according to claim 2,
wherein the description information defines the basic region for which one vertex of the basic region that is a rectangle is a reference, and defines the adjacent region that is a rectangle sharing a side with the basic region with one vertex as a reference.

5. The distribution device according to any one of claims 2 to 4,
wherein the description information defines the basic region and the adjacent regions through a combination of unit grids that divide the displayable range that is a rectangle into a grid shape.

6. A display control method executed by a display control device that sets at least a portion of a displayable range that is a range of content able to be displayed on one screen as a display object, the method comprising:
specifying, with reference to description information in which a basic region that is a display object in the displayable range and a plurality of adjacent regions that are regions in the displayable range adjacent to the basic region and have different shapes to one another are defined, the adjacent region combined with the basic region; and
controlling display by setting a part corresponding to a region as a display object in which the basic region and the adjacent region specified in the specifying in the displayable range are combined.

7. A display control system, comprising:
the distribution device according to claim any one of claims 2 to 5; and
the display control device,
wherein the display control device performs display control with reference to the description information distributed by the distribution device.
